# EUROPÄISCHE PATENTSCHRIFT

(11) **EP 3 626 352 B1**
(45) Veröffentlichungstag und Bekanntmachung des Hinweises auf die Patenterteilung: **18.06.2025**
(21) Anmeldenummer: 19183382.1
(22) Anmeldetag: 28.06.2019
(51) Int. Cl.: B05B 1/30, B05B 7/08, B05B 7/06, B05B 7/24

(54) **GRUNDKÖRPER FÜR EINE SPRITZPISTOLE, SPRITZPISTOLEN, SPRITZPISTOLEN-SET UND VERFAHREN ZUM UMRÜSTEN EINER SPRITZPISTOLE**
BASE BODY FOR A SPRAY GUN, SPRAY GUNS, SPRAY GUN SET AND METHOD FOR CONVERTING A SPRAY GUN
CORPS DE BASE POUR UN PISTOLET DE PULVÉRISATION, PISTOLET DE PULVÉRISATION, ENSEMBLE PISTOLET DE PULVÉRISATION ET PROCÉDÉ DE RÉÉQUIPEMENT D'UN PISTOLET DE PULVÉRISATION

(30) Priorität: 01.08.2018 DE 102018118738
(43) Veröffentlichungstag der Anmeldung: 25.03.2020
(73) Patentinhaber: SATA GmbH & Co. KG, 70806 Kornwestheim (DE)
(72) Erfinder: Volk, Eva, 71638 Ludwigsburg (DE); Wolter, Dietrich, 74321 Bietigheim-Bissingen (DE)

(56) Entgegenhaltungen:
- EP-A2- 0 114 064
- DE-T2- 69 827 994
- FR-A1- 2 863 512
- KR-A- 20140 064 644
- US-A1- 2005 189 445
- US-A1- 2005 218 246
- US-A1- 2007 262 169
- US-A1- 2010 163 649
- US-B1- 6 612 506

## Beschreibung

Die Erfindung betrifft eine Spritzpistole, insbesondere Farbspritzpistole, gemäß dem Oberbegriff des Anspruchs 1, ein Verfahren zum Umrüsten einer Spritzpistole, insbesondere Farbspritzpistole, gemäß dem Oberbegriff des Anspruchs 11 und ein Verfahren zum Umrüsten einer Spritzpistole, insbesondere Farbspritzpistole, gemäß dem Oberbegriff des Anspruchs 13.

Gemäß dem Stand der Technik weist eine Spritzpistole, insbesondere Farbspritzpistole, insbesondere druckluftzerstäubende Farbspritzpistole, an ihrem Kopf eine Farbdüse auf, welche in den Pistolenkörper eingeschraubt wird. Die Farbdüse weist an ihrem vorderen Ende häufig ein hohlzylindrisches Zäpfchen auf, aus deren vorderer Mündung beim Betrieb der Spritzpistole das zu verspritzende Material austritt. Die Farbdüse kann in ihrem vorderen Bereich jedoch auch konisch ausgestaltet sein. Der Pistolenkopf weist in der Regel ein Außengewinde auf, über das ein Luftdüsenring mit einer darin angeordneten Luftkappe am Pistolenkopf angeschraubt wird. Die Luftkappe weist eine zentrale Öffnung auf, deren Durchmesser größer ist als der Außendurchmesser des Farbdüsenzäpfchens bzw. der Außendurchmesser des vorderen Ende einer konischen Farbdüse. Die zentrale Öffnung der Luftkappe und das Zäpfchen bzw. das vordere Ende der Farbdüse bilden zusammen einen Ringspalt. Aus diesem Ringspalt tritt die sogenannte Zerstäuberluft aus, welche in der oben beschriebenen Düsenanordnung ein Vakuum an der Stirnfläche der Farbdüse erzeugt, wodurch das zu verspritzende Material aus der Farbdüse herausgesaugt wird. Die Zerstäuberluft trifft auf den Farbstrahl, wodurch der Farbstrahl in Fäden und Bänder zerrissen wird. Diese Fäden und Bänder zerfallen aufgrund ihrer hydrodynamischen Instabilität, der Wechselwirkung zwischen der schnell strömenden Druckluft und der Umgebungsluft sowie aufgrund von aerodynamischen Störungen zu Tröpfchen, welche durch die Zerstäuberluft von der Düse weg geblasen werden.

Die Luftkappe weist häufig ferner zwei Hörner auf, welche einander diametral gegenüberstehen und in Ausströmrichtung über den genannten Ringspalt und die Materialauslassöffnung hinausstehen. Von der Rückseite der Luftkappe verlaufen zwei Versorgungsbohrungen, d.h. Hornluftzuführkanäle, zu Hornluftbohrungen in den Hörnern. In der Regel weist jedes Horn zumindest eine Hornluftbohrung auf, bevorzugt weist jedes Horn jedoch zumindest zwei Hornluftbohrungen auf, aus welchen die Hornluft austritt. Die Hornluftbohrungen sind in der Regel so orientiert, dass sie auf die Düsenlängsachse in Austrittsrichtung nach dem Ringspalt zeigen, sodass die aus den Hornluftbohrungen austretende sogenannte Hornluft die bereits aus dem Ringspalt ausgetretene Luft bzw. den Farbstrahl oder den bereits zumindest teilweise entstandenen Farbnebel beeinflussen können. Dadurch wird der Farbstrahl oder auch Spritzstrahl mit ursprünglich kreisrundem Querschnitt (Rundstrahl) an seinen den Hörnern zugewandten Seiten zusammengedrückt und in senkrecht dazu stehender Richtung verlängert. Dadurch entsteht ein sogenannter Breitstrahl, welcher eine größere Flächenlackiergeschwindigkeit erlaubt. Neben der Verformung des Spritzstrahls bezweckt die Hornluft eine weitere Zerstäubung des Spritzstrahls.

In den Pistolenkörper, d.h. den Grundkörper der Spritzpistole, sind in der Regel Luftkanäle eingebracht, wobei Luft aus einem der Kanäle, wie oben beschrieben, zur Verwendung als Zerstäuberluft zum genannten Ringspalt geleitet wird, und Luft aus einem anderen Kanal, wie oben beschrieben, zur Verwendung als Hornluft zu den genannten Hornluftöffnungen geleitet wird. Hierzu münden die Luftkanäle in einer Stirnfläche des Kopfs des Pistolenkörpers und werden über eine Luftverteiler-Anordnung zum Ringspalt bzw. zu den Hornluftbohrungen geleitet. Die Luftverteiler-Anordnung umfasst häufig einen Luftverteiler-Ring, der den Zerstäuberluftbereich und den Hornluftbereich voneinander trennt. Eine derartige Düsenanordnung bzw. Luftverteiler-Anordnung ist beispielsweise in der DE 20 2010 012 449 U1 und in den chinesischen Gebrauchsmusterschriften ZL 2014 2 0431026.7 und ZL 2016 2 0911120.1 offenbart.

Nachteilhaft am oben beschriebenen Stand der Technik, nämlich der Luftverteiler-Anordnung aufweisend einen Luftverteiler-Ring, ist, dass der Luftverteiler-Ring vom Hersteller der Spritzpistole als separates Bauteil hergestellt und vom Hersteller bzw. vom Benutzer der Spritzpistole montiert werden muss. Der Benutzer muss das separate Bauteil reinigen und wechseln. Ferner besteht das Risiko eines Verlusts des Luftverteiler-Rings, wodurch die Spritzpistole unbrauchbar wird bis der Benutzer Ersatz beschafft hat. Um eine einfache Abdichtung zwischen Zerstäuberluftbereich und Hornluftbereich zu erreichen, ist der Luftverteiler-Ring aus Kunststoff hergestellt. Dadurch ist er jedoch anfällig für Beschädigungen. Ferner sind die Luftverteiler-Ringe gemäß dem Stand der Technik relativ komplex ausgestaltet.

Die US 2007/0262169 A1 zitiert die taiwanesische Gebrauchsmusterschrift TW 510253, die eine Pistolenkopfstruktur offenbart, wobei der Pistolenkopf zwei ringförmige Nuten offenbart, die durch drei umlaufende Wandungen am Pistolenkopf begrenzt werden. Die beschriebene Düsenstruktur umfasst eine Dichtscheibe b, ein Anschlussteil c, eine Düse d, einen Sprühkopf d und eine Schraubenmutter f.

Sowohl die Pistolenkopfstruktur gemäß dem in der US-Schrift zitierten Stand der Technik, wie auch die in der genannten US-Schrift selbst beschriebene Anordnung umfasst eine Vielzahl an Einzelteilen mit den oben beschriebenen Nachteilen. Die einzelnen Komponenten sind teilweise relativ filigran ausgestaltet. Bei einer Beschädigung von einer der Komponenten besteht das Risiko, dass eine Abdichtung zwischen Zerstäuberluftbereich und Hornluftbereich bereits nicht mehr gegeben ist, was einen negativen Einfluss auf den Spritzstrahl hat. Ferner ist der Pistolenkopf aufgrund der Vielzahl an aufeinandergesetzten Komponenten relativ lang. Weiter zeigt die US6612506B1 eine Spritzpistole und die DE69827994T2 ein Verfahren zum Umrüsten einer Spritzpistole nach dem Stand der Technik.

Aufgabe der vorliegenden Erfindung ist es daher, eine Spritzpistole, insbesondere Farbspritzpistole, bereitzustellen, welche weniger anfällig für Beschädigungen und funktionssicher sind.

Eine weitere Aufgabe der vorliegenden Erfindung ist es, Verfahren zum Umrüsten einer Spritzpistole, insbesondere Farbspritzpistole, bereitzustellen, mittels derer eine Spritzpistole, insbesondere Farbspritzpistole, mit einem ersten Düseninnendruck einfach zu einer Spritzpistole, insbesondere Farbspritzpistole, mit einem zweiten Düseninnendruck und zurück umgerüstet werden kann.

Die erste Aufgabe wird durch eine Spritzpistole, insbesondere Farbspritzpistole, gelöst, die zumindest einen Grundkörper, eine Düse mit zumindest einer Materialdüse, eine Luftkappe, einen ersten luftführenden Bereich und einen zweiten luftführenden Bereich aufweist, wobei der erste luftführende Bereich Luft führt, die zur Zerstäubung von zu verspritzendem Material verwendet wird, und der zweite luftführende Bereich Luft führt, die zur Beeinflussung eines Spritzstrahls verwendet wird, wobei der Grundkörper zumindest einen Kopfbereich zur Anbringung einer Düsenanordnung aufweist, wobei der Kopfbereich zumindest eine innere Wandung, eine äußere Wandung und eine dazwischen angeordnete mittlere Wandung aufweist, wobei die Wandungen umlaufend und einstückig mit dem Grundkörper ausgebildet sind, wobei das vordere Ende der mittleren Wandung entlang einer Achse gegenüber dem vorderen Ende der äußeren Wandung zurückgesetzt ist, wobei der erste luftführende Bereich und der zweite luftführende Bereich zumindest bereichsweise durch die mittlere Wandung des Grundkörpers, ein an der Materialdüse einstückig angeordnetes Scheibenelement, zumindest eine an der Materialdüse angeordnete, insbesondere unverlierbar angeordnete, Prallscheibe und durch zumindest einen Teil der Luftkappe voneinander separiert sind, und wobei die innere Wandung, die mittlere Wandung und die äußere Wandung jeweils kreisrund ausgestaltet und konzentrisch zueinander angeordnet sind. Durch die beschriebene Ausgestaltung ist eine Trennung bzw. Abdichtung zwischen dem ersten und dem zweiten luftführenden Bereich nur mit bereits vorhandenen Teilen, d.h. Teilen, die auch eine andere Funktion als die Trennung der beiden Bereiche erfüllen, möglich. Es ist kein zusätzliches Dichtelement nötig, wodurch die Anzahl der Einzelteile niedrig gehalten werden kann, um die oben genannten Nachteile zu überwinden bzw. die oben genannten Vorteile zu realisieren.

Die Luft, die zur Zerstäubung von zu verspritzendem Material verwendet und von dem ersten luftführenden Bereich geführt wird, wird häufig als Zerstäuberluft bezeichnet. Die Luft, die zur Beeinflussung eines Spritzstrahls verwendet und von dem zweiten luftführenden Bereich geführt wird, wird häufig als Hornluft bezeichnet. Die Bereiche werden häufig als Zerstäuberluftbereich bzw. Hornluftbereich bezeichnet. Das Scheibenelement kann als Teil der Materialdüse angesehen werden, sodass eine eigentlich am Scheibenelement angeordnete Prallscheibe auch als an der Materialdüse angeordnet angesehen werden kann. Dass die Prallscheibe "unverlierbar" an der Materialdüse angeordnet ist, bedeutet vorliegend, dass die Prallscheibe nicht oder nicht ohne größere Anstrengung von der Materialdüse entfernt werden kann und das Entfernen nicht vorgesehen ist. Beispielsweise kann die Prallscheibe mit der Materialdüse verpresst, verklebt, vernietet oder verschweißt sein. Auch eine starke Schnappverbindung oder ein starkes Verschrauben kann die Prallscheibe "unverlierbar" machen.

Die am Kopfbereich anbringbare Düsenanordnung kann beispielsweise eine Materialdüse, welche häufig auch als Farbdüse bezeichnet wird, und zumindest dem Auslass des zu verspritzenden Materials dient, eine Luftkappe zum Auslass von Luft und einen Luftdüsenring zum Verbinden der Luftkappe mit dem Grundkörper umfassen.

Als Wandung kann vorliegend insbesondere ein Steg oder eine Trennwand mit einer Dicke von einigen Millimetern verstanden werden, die sich im Wesentlichen parallel zur Zentral- bzw. Längsachse des Kopfbereichs des Grundkörpers bzw. zur Zentral- bzw. Längsachse der in oder am Grundkörper anordenbaren Materialdüse erstreckt. Es kann sich dabei auch um eine Zentral- bzw. Längsachse eines oberen Teils des Grundkörpers und/oder um die Zentral- bzw. Längsachse einer Aufnahmeöffnung zur Aufnahme einer Materialmengenreguliereinrichtung handeln. Die Wandung steht vorzugsweise im Wesentlichen senkrecht auf einer Fläche, beispielsweise einer Frontfläche des Kopfes des Grundkörpers, welche im Wesentlichen senkrecht zu der bzw. den oben genannten Zentral- bzw. Längsachsen verläuft. Die Bezeichnungen "innere", "mittlere" und "äußere" Wandung sind derart zu verstehen, dass in der Ansicht von vorne auf den Pistolenkopf die innere Wandung in radialer Richtung dem Mittelpunkt des Pistolenkopfes näher ist als die mittlere Wandung, welche dem Mittelpunkt des Pistolenkopfes wiederum näher ist als die äußere Wandung.

Die Wandungen sind kreisrund ausgestaltet und haben vorzugsweise eine konstante Dicke.

Die Bezeichnung "einstückig" mit dem Grundkörper ausgebildet bedeutet vorliegend, dass die Wandungen und der restliche Grundkörper aus einem Stück gefertigt wurden, beispielsweise mittels Guss, spanender Bearbeitung, 3D-Druck oder sonstigen Verfahren.

D.h. die Wandungen und der Grundkörper müssen nicht getrennt voneinander gefertigt und anschließend miteinander verbunden werden. Dadurch kann die Anzahl der Einzelteile reduziert werden. Besonders bevorzugt wird der Grundkörper zunächst aus einem gebogenen Vollmaterialstab geschmiedet und anschließend mittels Bohrer, Fräser oder einer Kombination aus diesen bearbeitet.

Unter "entlang einer Achse" ist vorliegend entlang der Zentral- bzw. Längsachse des Kopfbereichs des Grundkörpers bzw. der Zentral- bzw. Längsachse des in oder am Grundkörper anordenbaren Materialdüse zu verstehen. Als "vorne" wird dabei die Spritzrichtung bzw. die Seite des Grundkörpers angesehen an dem die Materialdüse angeordnet oder anordenbar ist, als "hinten" die Gegenseite bzw. Gegenrichtung, an der beispielsweise eine Materialmengenreguliereinrichtung angeordnet bzw. anordenbar ist.

Die oben letztgenannte Aufgabe wird durch ein Verfahren zum Umrüsten einer Spritzpistole, insbesondere Farbspritzpistole, mit einem ersten Düseninnendruck zu einer Spritzpistole, insbesondere Farbspritzpistole, mit einem zweiten Düseninnendruck, gelöst, wobei der erste Düseninnendruck größer ist als der zweite Düseninnendruck, wobei das Verfahren insbesondere als einen Schritt das Entfernen einer Hochdruck-Düsenanordnung von oder aus einem Grundkörper der Spritzpistole umfasst, wobei die Hochdruck-Düsenanordnung zumindest eine Düse mit einer Materialdüse mit einem hohlen Abschnitt zur Durchleitung des zu verspritzenden Materials und einer Materialauslassöffnung aufweist, und wobei das Verfahren als einen weiteren Schritt das Anordnen einer Niederdruck-Düsenanordnung in oder an dem Grundkörper der Spritzpistole umfasst, wobei die Niederdruck-Düsenanordnung zumindest eine Düse mit einer Materialdüse mit einem hohlen Abschnitt zur Durchleitung des zu verspritzenden Materials und einer Materialauslassöffnung aufweist, wobei die Düse der Hochdruck-Düsenanordnung, welche von oder aus dem Grundkörper der Spritzpistole entfernt wird, ferner ein am äußeren Umfang des hohlen Abschnitts angeordnetes Scheibenelement und zumindest eine erste Prallscheibe aufweist, wobei die erste Prallscheibe an der der Materialauslassöffnung abgewandten Seite des Scheibenelements angeordnet ist und einen inneren und einen äußeren Umfang aufweist, und wobei die Düse der Niederdruck-Düsenanordnung, welche in oder an dem Grundkörper der Spritzpistole angeordnet wird, ferner ein am äußeren Umfang des hohlen Abschnitts angeordnetes Scheibenelement und zumindest eine erste Prallscheibe aufweist, wobei die erste Prallscheibe an der der Materialauslassöffnung abgewandten Seite des Scheibenelements angeordnet ist, einen inneren und einen äußeren Umfang aufweist, und eine sich an der der Materialauslassöffnung abgewandten Seite der ersten Prallscheibe angeordnete zweite Prallscheibe aufweist, wobei der äußere Umfang der ersten Prallscheibe der Düse der Niederdruck-Düsenanordnung kleiner ist als der äußere Umfang der ersten Prallscheibe der Düse der Hochdruck-Düsenanordnung.

Die Aufgabe wird ferner durch ein Verfahren zum Umrüsten einer Spritzpistole, insbesondere Farbspritzpistole, mit einem ersten Düseninnendruck zu einer Spritzpistole, insbesondere Farbspritzpistole, mit einem zweiten Düseninnendruck gelöst, wobei der erste Düseninnendruck kleiner ist als der zweite Düseninnendruck, wobei das Verfahren insbesondere als einen Schritt das Entfernen einer Niederdruck-Düsenanordnung von oder aus einem Grundkörper der Spritzpistole umfasst, wobei die Niederdruck-Düsenanordnung zumindest eine Düse mit einer Materialdüse mit einem hohlen Abschnitt zur Durchleitung des zu verspritzenden Materials und einer Materialauslassöffnung aufweist, und wobei das Verfahren als einen weiteren Schritt das Anordnen einer Hochdruck-Düsenanordnung in oder an dem Grundkörper der Spritzpistole umfasst, wobei die Hochdruck-Düsenanordnung zumindest eine Düse mit einer Materialdüse mit einem hohlen Abschnitt zur Durchleitung des zu verspritzenden Materials und einer Materialauslassöffnung aufweist, wobei die Düse der Niederdruck-Düsenanordnung, welche von oder aus dem Grundkörper der Spritzpistole entfernt wird, ferner ein am äußeren Umfang des hohlen Abschnitts angeordnetes Scheibenelement und zumindest eine erste Prallscheibe aufweist, wobei die erste Prallscheibe an der der Materialauslassöffnung abgewandten Seite des Scheibenelements angeordnet ist, einen inneren und einen äußeren Umfang aufweist, und eine sich an der der Materialauslassöffnung abgewandten Seite der ersten Prallscheibe angeordnete zweite Prallscheibe aufweist, und wobei die Düse der Hochdruck-Düsenanordnung, welche in oder an dem Grundkörper der Spritzpistole angeordnet wird, ferner ein am äußeren Umfang des hohlen Abschnitts angeordnetes Scheibenelement und zumindest eine erste Prallscheibe aufweist, wobei die erste Prallscheibe an der der Materialauslassöffnung abgewandten Seite des Scheibenelements angeordnet ist und einen inneren und einen äußeren Umfang aufweist, wobei der äußere Umfang der ersten Prallscheibe der Düse der Hochdruck-Düsenanordnung größer ist als der äußere Umfang der ersten Prallscheibe der Düse der Niederdruck-Düsenanordnung.

Spritzpistolen, insbesondere Farbspritzpistolen, arbeiten mit verschiedenen Druckverfahren. Konventionelle Spritzpistolen arbeiten mit relativ hohen Spritzdrücken von mehreren Bar. Bei sogenannten HVLP-Pistolen liegt der Düseninnendruck bei maximal 10 psi oder 0,7 bar, wodurch Übertragungsraten von weit mehr als 65 % erreicht werden. Compliant-Spritzpistolen wiederum haben einen Düseninnenruck von mehr als 10 psi oder 0,7 bar, erreichen jedoch ebenfalls eine Übertragungsrate von mehr als 65 %.

Gemäß dem Stand der Technik unterscheiden sich HVLP-Spritzpistolen strukturell insbesondere dadurch von Compliant-Spritzpistolen, dass in den Luftkanalmündungen im Kopf des Grundkörpers von HVLP-Spritzpistolen zusätzliche Drossel-Röhrchen eingesetzt sind. Dies macht zusätzliche Herstellungsschritte erforderlich und eine einmal als HVLP-Spritzpistole ausgestaltete Spritzpistole bzw. ein zur Verwendung für eine HVLP-Spritzpistole ausgestalteter Grundkörper kann nicht oder nur schwer zu einer Compliant-Spritzpistole bzw. zu einem Compliant-Spritzpistolen-Grundkörper umgerüstet werden, da die Drossel-Röhrchen fest in die Luftkanalmündungen eingebracht, beispielsweise eingepresst werden müssen, damit ein unbeabsichtigtes Lösen vermieden wird.

Der Vorteil des ersten erfindungsgemäßen Verfahrens zum Umrüsten einer Spritzpistole, insbesondere Farbspritzpistole, mit einem ersten Düseninnendruck zu einer Spritzpistole, insbesondere Farbspritzpistole, mit einem zweiten Düseninnendruck, wobei der erste Düseninnendruck größer ist als der zweite Düseninnendruck, liegt darin, dass der Grundkörper der Spritzpistole unverändert bleiben kann, wenn beispielsweise eine Compliant-Spritzpistole zu einer HVLP-Spritzpistole umgerüstet werden soll. Die Spritzpistole kann einfach durch Austausch der Düse zu einer Spritzpistole mit geringerem Düseninnendruck umgerüstet werden. Auf die Herstellung separater Drossel-Röhrchen und deren Einbringen in den Grundkörper der Spritzpistole kann verzichtet werden.

Der Vorteil des zweiten erfindungsgemäßen Verfahrens zum Umrüsten einer Spritzpistole, insbesondere Farbspritzpistole, mit einem ersten Düseninnendruck zu einer Spritzpistole, insbesondere Farbspritzpistole, mit einem zweiten Düseninnendruck, wobei der erste Düseninnendruck kleiner ist als der zweite Düseninnendruck, liegt ebenso darin, dass der Grundkörper der Spritzpistole unverändert bleiben kann, wenn beispielsweise eine HVLP-Spritzpistole zu einer Compliant-Spritzpistole umgerüstet werden soll. Die Spritzpistole kann einfach durch Austausch der Düse zu einer Spritzpistole mit höherem Düseninnendruck umgerüstet werden. Auf das schwierige Entfernen der in den Grundkörper der Spritzpistole eingebrachten Drossel-Röhrchen kann verzichtet werden.

Bei beiden erfindungsgemäßen Verfahren zum Umrüsten einer Spritzpistole, insbesondere Farbspritzpistole, liegt ein weiterer Vorteil darin, dass das Umrüsten auch nach Auslieferung der Spritzpistole zum Kunden noch einfach möglich ist.

Unter dem Düseninnendruck der Spritzpistole wird der Druck verstanden, welcher in der Luftkappe der Spritzpistole herrscht. Häufig ist dabei der Zerstäuberluftbereich vom Hornluftbereich separiert und im Zerstäuberluftbereich kann ein anderer Druck herrschen als im Hornluftbereich. Die Drücke im Zerstäuberluftbereich und im Hornluftbereich können jedoch auch gleich sein. Der Düseninnendruck kann beispielsweise mit Hilfe einer sogenannten Prüfluftkappe gemessen werden. Dabei handelt es sich um eine spezielle Luftkappe, welche anstelle der üblichen Luftkappe an der Spritzpistole angeordnet wird. Die Prüfluftkappe weist in der Regel zwei Manometer auf, wobei eines davon über eine Bohrung in der Prüfluftkappe mit dem Zerstäuberluftbereich und das andere über eine weitere Bohrung in der Prüfluftkappe mit dem Hornluftbereich verbunden ist.

Die Bezeichnungen Niederdruck-Düsenanordnung und Hochdruck-Düsenanordnung sollen vorliegend nicht bedeuten, dass die jeweilige Düsenanordnung nur in klassischen Niederdruck- bzw. Hochdruck-Spritzpistolen Anwendung findet bzw. dass durch den Einsatz der jeweiligen Düsenanordnung die Spritzpistole zu einer klassischen Niederdruck-, insbesondere HVLP-Spritzpistole bzw. zu einer klassischen Hochdruck-Pistole wird. Vielmehr ist darunter nur zu verstehen, dass die Spritzpistole, wenn sie mit der Hochdruck-Düsenanordnung ausgestattet ist, einen höheren Düseninnendruck aufweist als wenn sie mit der Niederdruck-Düsenanordnung ausgestattet ist. Vorzugsweise erfüllt die mit der Niederdruck-Düsenanordnung ausgestattete Spritzpistole bzw. der mit der Niederdruck-Düsenanordnung ausgestattete Grundkörper die Kriterien einer HVLP-Spritzpistole und die mit der Hochdruck-Düsenanordnung ausgestattete Spritzpistole bzw. der mit der Hochdruck-Düsenanordnung ausgestattete Grundkörper die Kriterien einer Compliant- Spritzpistole.

Die Düsenanordnung kann neben einer Düse umfassend zumindest eine Materialdüse mit ggf. daran angeordneten anderen Komponenten auch eine Luftkappe und einen Luftdüsenring aufweisen. Alle diese Komponenten können bei der Niederdruck-Düsenanordnung anders ausgestaltet sein als bei der Hochdruck-Düsenanordnung, die Unterschiede können sich jedoch auch auf eine oder einige der Komponenten beschränken, während die anderen Komponenten bei der Niederdruck-Düsenanordnung und bei der Hochdruck-Düsenanordnung gleich sind. Bevorzugt liegen die Unterschiede in der Materialdüse bzw. den daran angeordneten Komponenten und in der Luftkappe. Die Unterschiede in der Düse, der Materialdüse bzw. den daran angeordneten Komponenten können insbesondere darin liegen, dass die Düse der Niederdruck-Düsenanordnung im Vergleich zur Düse der Hochdruck-Düsenanordnung eine zusätzliche Prallscheibe aufweist und dass die erste Prallscheibe der Düse der Niederdruck-Düsenanordnung einen kleineren äußeren Umfang aufweist als die erste Prallscheibe der Düse der Hochdruck - Düsenanordnung. Die zusätzliche Prallscheibe kann dabei als zusätzliche Drossel wirken, die den Strömungsbereich von Luft einschränkt. Die zusätzliche Prallscheibe kann jedoch auch alternativ oder zusätzlich die oben beschriebenen Funktionen der ersten Prallscheibe wie Luftleitung, Luftumlenkung, Homogenisierung und/oder Luftverteilung innehaben. Ferner können zwar sowohl das Scheibenelement der Düse der Niederdruck-Düsenanordnung wie auch das Scheibenelement der Düse der Hochdruck-Düsenanordnung Durchgangsöffnungen, insbesondere Durchgangsbohrungen, für Luft aufweisen, welche jedoch bei der Düse der Hochdruck-Düsenanordnung anders ausgestaltet sein können oder in anderer Anzahl vorliegen können als bei der Düse der Niederdruck-Düsenanordnung. Gleiches gilt für die Prallscheiben. Die Unterschiede in der Luftkappe liegen vorzugsweise darin, dass die zentrale Öffnung der Luftkappe der Niederdruck-Düsenanordnung einen größeren Durchmesser aufweist als die zentrale Öffnung der Luftkappe der Hochdruck-Düsenanordnung. Dadurch ist - bei im Wesentlichen gleichbleibendem Außendurchmesser des vorderen Endes der Materialdüse - der Ringspalt, der durch die Außenfläche des vorderen Bereichs der Materialdüse und durch die Wand, die die zentrale Öffnung in der Luftkappe begrenzt, gebildet wird, und aus dem die Zerstäuberluft austritt, bei der Niederdruck-Düsenanordnung größer als bei der Hochdruck-Düsenanordnung.

Vorteilhafte Ausgestaltungen sind Gegenstand der Unteransprüche.

Bevorzugt ist das vordere Ende der mittleren Wandung entlang der Achse um 2 mm bis 4 mm gegenüber dem vorderen Ende der äußeren Wandung zurückgesetzt.

Vorzugsweise grenzen die innere Wandung und die mittlere Wandung des Grundkörpers eine erste Luftverteilerkammer ab und die mittlere Wandung und die äußere Wandung grenzen eine zweite Luftverteilerkammer ab. Das bedeutet, sie definieren, vorzugsweise mit anderen Wandungen oder Flächen des Grundkörpers oder Wandungen oder Flächen anderer Komponenten, derartige Luftverteilerkammern. Die Luftverteilerkammern sind vorzugsweise nicht abgeschlossen, sondern weisen Ein-, Aus- und/oder Durchlässe auf. Vorzugsweise sind die Luftverteilerkammern im Wesentlichen ringförmig ausgestaltet, können jedoch auch andere Formen aufweisen, wenn dies vorteilhaft erscheint. Bevorzugt sind die Kammern umlaufend, d.h. erstrecken sich über 360°, sie können jedoch auch auf einen kleineren Bereich begrenzt sein. Der Zweck der Luftverteilerkammern kann sein, Luft, welche aus zumindest einer Öffnung in die Luftverteilerkammer strömt, über einen größeren Bereich zu verteilen, vorzugsweise über 360°. Die Luftverteilerkammer zwischen innerer und mittlerer Wandung kann als "innere Luftverteilerkammer", die Luftverteilerkammer zwischen mittlerer und äußerer Wandung als "äußere Luftverteilerkammer" bezeichnet werden. Bei der inneren Luftverteilerkammer kann es sich um die Luftverteilerkammer für Zerstäuberluft und bei der äußeren Luftverteilerkammer um die Luftverteilerkammer für Hornluft handeln.

Zwischen der inneren Wandung und der mittleren Wandung ist bevorzugt eine erste Frontfläche und zwischen der mittleren Wandung und der äußeren Wandung eine zweite Frontfläche angeordnet, wobei die erste Frontfläche entlang der vorgenannten Achse zum vorderen Ende der äußeren Wandung zumindest bereichsweise einen ersten Abstand aufweist, wobei die zweite Frontfläche entlang der vorgenannten Achse zum vorderen Ende der äußeren Wandung zumindest bereichsweise einen zweiten Abstand aufweist, und wobei der erste Abstand größer ist als der zweite Abstand. Bei der genannten Achse handelt es sich vorliegend wieder um die Zentral- bzw. Längsachse des Kopfbereichs des Grundkörpers bzw. um die Zentral- bzw. Längsachse der in oder am Grundkörper anordenbaren Materialdüse. Die Bezeichnung "Frontfläche" soll vorliegend ausdrücken, dass die Fläche der obigen Definition "nach vorne", insbesondere in Spritzrichtung zeigt. Sie stehen damit im Wesentlichen senkrecht zur oben genannten Zentral- bzw. Längsachse und senkrecht zu den Wandungen zwischen denen sie angeordnet sind. Die Frontflächen können eine Art Grundfläche der oben genannten Luftverteilerkammern bilden und sind vorzugsweise Flächen des Grundkörpers. Die erste Frontfläche ist zumindest bereichsweise entlang der genannten Achse vom vorderen Ende der äußeren Wandung weiter entfernt als die zweite Frontfläche. Die Abstände müssen jedoch nicht über den gesamten Verlauf der Frontfläche konstant sein. Vielmehr können die Frontflächen auch Schrägen, Stufen, Vertiefungen, Absätze oder ähnliches aufweisen.

Vorzugsweise beträgt der erste Abstand, d.h. der Abstand der Frontfläche zwischen innerer und mittlerer Wandung zum vorderen Ende der äußeren Wandung entlang der Achse 9 mm bis 11 mm und der zweite Abstand, d.h. der Abstand der Frontfläche zwischen mittlerer und äußerer Wandung zum vorderen Ende der äußeren Wandung entlang der Achse 4 mm bis 6 mm. Durch die unterschiedlichen Abstände kann die innere Luftverteilerkammer eine größere Tiefe und somit, trotz einer geringeren Grundfläche, ein größeres Volumen aufweisen als die äußere Luftverteilerkammer. Würden die Luftverteilerkammern jeweils als abgeschlossene Kammern angesehen werden, wobei die Abgrenzung jeweils von der Grundfläche, den beiden benachbarten Wandungen und durch eine imaginäre Deckelfläche, welche parallel zu der Grundfläche auf der niedrigeren der beiden Wandungen angeordnet ist, erfolgen würde, so würde besonders bevorzugt das Volumen der inneren Luftverteilerkammer zwischen 1.000 mm³ und 1.500 mm³ und das Volumen der äußeren Luftverteilerkammer zwischen 400 mm³ und 900 mm³ betragen.

Bevorzugt weisen zumindest die erste Frontfläche und/oder die zweite Frontfläche zumindest bereichsweise eine Nut auf; besonders bevorzugt weist zumindest die zweite Frontfläche zumindest bereichsweise eine Nut mit einer Bodenfläche auf, wobei die Bodenfläche der Nut entlang der vorgenannten Achse, insbesondere der oben genannten Zentral- bzw. Längsachse des Kopfbereichs des Grundkörpers bzw. der Zentral- bzw. Längsachse der in oder am Grundkörper anordenbaren Materialdüse, zum vorderen Ende der äußeren Wandung einen dritten Abstand aufweist, und wobei der dritte Abstand kleiner ist als der erste Abstand der ersten Frontfläche zum vorderen Ende der äußeren Wandung. Die Bodenfläche der Nut liegt also entlang der Achse zwischen der ersten Frontfläche und der zweiten Frontfläche. Der genannte dritte Abstand setzt sich zusammen aus dem Abstand der zweiten Frontfläche zum vorderen Ende der äußeren Wandung plus den Abstand zwischen Bodenfläche der Nut und zweiter Frontfläche, d.h. der Tiefe der Nut.

Die Breite der Nut in der ersten bzw. in der zweiten Frontfläche entspricht bevorzugt im Wesentlichen der Breite der ersten Frontfläche bzw. der zweiten Frontfläche. Die Nut in der ersten Frontfläche weist besonders bevorzugt im Wesentlichen die gleiche Breite auf wie die erste Frontfläche, die Nut in der zweiten Frontfläche weist besonders bevorzugt im Wesentlichen die gleiche Breite auf wie die zweite Frontfläche. Unter der Breite der Nut bzw. der Frontfläche ist dabei jeweils die Ausdehnung in radialer Richtung des Kopfbereichs des Grundkörpers zu verstehen oder auch der Abstand zwischen innerer und mittlerer bzw. zwischen mittlerer und äußerer Wandung in radialer Richtung.

Besonders bevorzugt erstreckt sich die Nut in Umfangsrichtung über 25 % bis 75 %, insbesondere über 45 % bis 55 %, des Umfangs der ersten Frontfläche bzw. der zweiten Frontfläche. Die erste Frontfläche weist vorzugsweise zumindest eine innere Luftauslassöffnung, insbesondere zwei innere Luftauslassöffnungen, auf und die zweite Frontfläche weist zumindest eine äußere Luftauslassöffnung, insbesondere zwei äußere Luftauslassöffnungen, auf. Zumindest eine Luftauslassöffnung, insbesondere eine äußere Luftauslassöffnung, liegt besonders bevorzugt innerhalb der Nut in der Frontfläche. Dadurch und insbesondere durch die Erstreckung der Nut über 25 % bis 75 %, insbesondere über 45 % bis 55 %, des Umfangs der jeweiligen Frontfläche, ist eine noch bessere Verteilung der aus der zumindest einen Luftauslassöffnung ausströmenden Luft über den Umfang der Luftverteilerkammer gegeben. Verläuft die entsprechende Frontfläche über 360°, so erstreckt sich die Nut vorzugsweise über 90° bis 270°, insbesondere über 162° bis 198°. Die Bezeichnungen "innere" und "äußere" Luftauslassöffnung dienen lediglich der Unterscheidung zwischen den Luftauslassöffnungen. Bevorzugt liegt die zumindest eine "innere" Luftauslassöffnung in radialer Richtung weiter innen, d.h. näher an der Zentral- bzw. Längsachse des Kopfbereichs des Grundkörpers, als die zumindest eine "äußere" Luftauslassöffnung, sie können jedoch auch den gleichen Abstand zur Zentral- bzw. Längsachse des Kopfbereichs des Grundkörpers haben.

Besonders bevorzugt weist die erste Frontfläche zwei innere Luftauslassöffnungen und die zweite Frontfläche zwei äußere Luftauslassöffnungen auf, wobei die äußeren Luftauslassöffnungen in der zweiten Frontfläche innerhalb einer Nut liegen, und wobei sich die Nut über rund 50 % des Umfangs der zweiten Frontfläche erstreckt.

Die zumindest eine innere Luftauslassöffnung der ersten Frontfläche erstreckt sich vorzugsweise zumindest bereichsweise über zumindest 85 % der Breite der ersten Frontfläche und die zumindest eine äußere Luftauslassöffnung der zweiten Frontfläche erstreckt sich vorzugsweise zumindest bereichsweise über zumindest 85 % der Breite der zweiten Frontfläche.

Besonders bevorzugt befinden sich, wie oben bereits erwähnt, jeweils zwei Luftauslassöffnungen in der ersten Frontfläche und in der zweiten Frontfläche. Es handelt sich bei den Luftauslassöffnungen insbesondere um Bohrungen, wobei es vorteilhaft ist, dass der Bohrungsdurchmesser möglichst groß ist, um eine größtmögliche Luftmenge zu erreichen. Der Platz für die Bohrungen ist durch die Wandungen beschränkt, weshalb sich die Bohrungen bzw. allgemein die Luftauslassöffnungen möglichst weit über die Breite der Frontflächen erstrecken sollten.

Bevorzugt weist der Grundkörper zumindest zwei Zerstäuberluftkanäle auf, welche sich von der ersten Frontfläche in eine Rund-Breitstrahl-Luftverteilerkammer erstrecken und/oder der Grundkörper weist zumindest zwei Hornluftkanäle auf, welche sich von der zweiten Frontfläche in eine Rund-Breitstrahl-Luftverteilerkammer erstrecken, wobei die Zerstäuberluftkanäle im Bereich der ersten Frontfläche voneinander beabstandet sind und sich im Bereich der Rund-Breitstrahl-Luftverteilerkammer zumindest teilweise überschneiden, und/oder wobei die Hornluftkanäle im Bereich der zweiten Frontfläche voneinander beabstandet sind und sich im Bereich der Rund-Breitstrahl-Luftverteilerkammer zumindest teilweise überschneiden. Anders ausgedrückt weist die erste Frontfläche zwei voneinander beabstandete Zerstäuberluftkanal-Mündungen auf und die zweite Frontfläche weist zwei voneinander beabstandete Hornluftkanal-Mündungen auf. Die Rund-Breitstrahl-Luftverteilerkammer weist nur noch eine Zerstäuberluftkanal-Mündung und eine Hornluftkanal-Mündung auf. Die Außenkontur der Mündungen kann jeweils die Außenkontur einer "8" aufweisen. Daraus ergibt sich, dass sich die Gesamtquerschnittsfläche der beiden Luftkanäle jeweils von der Rund-Breitstrahl-Luftverteilerkammer zu den Frontflächen vergrößert.

In einem bevorzugten Ausführungsbeispiel ist das vordere Ende der inneren Wandung entlang der vorgenannten Achse, insbesondere der Zentral- bzw. Längsachse des Kopfbereichs des Grundkörpers bzw. der Zentral- bzw. Längsachse der in oder am Grundkörper anordenbaren Materialdüse, gegenüber dem vorderen Ende der mittleren Wandung zurückgesetzt. Besonders bevorzugt ist das vordere Ende der inneren Wandung entlang der Achse um 0,4 mm bis 0,6 mm gegenüber dem vorderen Ende der mittleren Wandung zurückgesetzt.

Dass das vordere Ende der inneren Wandung entlang der vorgenannten Achse gegenüber dem vorderen Ende der mittleren Wandung zurückgesetzt ist, bedeutet, dass die vordere Kante der inneren Wandung entlang der Achse zumindest bereichsweise gegenüber der vorderen Kante der mittleren Wandung zurückgesetzt ist. Die vordere Kante der mittleren Wandung muss sich nicht über ihren gesamten Verlauf vor der vorderen Kante der inneren Wandung befinden. Vielmehr kann sich die vordere Kante der mittleren Wandung bereichsweise auch hinter der vorderen Kante der inneren Wandung befinden. Dies bedeutet auch, dass die Wandungen nicht über ihren gesamten Verlauf eine konstante Höhe haben müssen. Vielmehr können die Wandungen Stufen, Absätze, Rampen oder ähnliches aufweisen. Vorzugsweise haben die Wandungen jedoch über ihren Verlauf eine konstante Höhe und die vordere Kante der inneren Wandung ist über ihren gesamten Verlauf entlang der Achse gegenüber dem vorderen Ende der mittleren Wandung zurückgesetzt.

Die Wandungen, d.h. die innere, mittlere und äußere Wandung, sind jeweils kreisrund ausgestaltet und konzentrisch zueinander angeordnet. Dadurch kann die Form einfacher hergestellt werden, weil sie relativ einfach und schnell durch Drehen oder durch ein rotationssymmetrisches Werkzeug realisiert werden kann. Vorzugsweise kann dies in einem einzigen Schritt erfolgen, wenn die Kontur des Werkzeugs der Kontur des vorderen Kopfbereichs des Grundkörpers entspricht bzw. ein Negativ der Kontur darstellt. Auch die im oder am Kopfbereich anordenbare Düse oder Düsenanordnung kann so zumindest teilweise rotationssymmetrisch ausgestaltet sein.

Bevorzugt weist die innere Wandung einen Außendurchmesser von 13 mm bis 15 mm, die mittlere Wandung einen Außendurchmesser von 22 mm bis 24 mm, und die äußere Wandung einen Außendurchmesser von 33 mm bis 35 mm auf.

Die innere Wandung kann einen Innendurchmesser von 11 mm bis 13 mm, die mittlere Wandung einen Innendurchmesser von 20 mm bis 22 mm, und die äußere Wandung einen Innendurchmesser von 31 mm bis 33 mm aufweisen.

Bevorzugt weist die innere Wandung zumindest bereichsweise ein Innengewinde und die äußere Wandung zumindest bereichsweise ein Außengewinde auf. In das Innengewinde der inneren Wandung kann beispielsweise eine Düse, insbesondere eine Materialdüse, ggf. mit daran angeordneten weiteren Komponenten, einschraubbar sein. Auf das Außengewinde der äußeren Wandung kann zum Beispiel ein Luftdüsenring aufschraubbar sein. Die Gewinde können beispielsweise metrische Gewinde, Trapezgewinde oder sonstige Gewinde sein. Das Innengewinde der inneren Wandung soll einen festen Sitz der Düse im Grundkörper und ggf. eine Abdichtung zwischen material- und luftführendem Bereich gewährleisten. Das Außengewinde der äußeren Wandung soll vor allem eine schnelle Anbringung und ein schnelles Entfernen des Luftdüsenrings am bzw. vom Grundkörper, aber auch eine Abdichtung des luftführenden Bereichs gegenüber der Umwelt ermöglichen. Vorzugsweise ist das Innengewinde der inneren Wandung ein Spitzgewinde und das Außengewinde der äußeren Wandung ein Schnellgewinde, insbesondere ein Trapezgewinde.

Das erfindungsgemäße Verfahren zum Umrüsten einer Spritzpistole, insbesondere Farbspritzpistole, mit einem ersten Düseninnendruck zu einer Spritzpistole, insbesondere Farbspritzpistole, mit einem zweiten Düseninnendruck, wobei der erste Düseninnendruck größer ist als der zweite Düseninnendruck, umfasst vorzugsweise als einen Schritt das Entfernen einer über einen Luftdüsenring am Grundkörper angeordneten Hochdruck-Luftkappe, wobei die Hochdruck-Luftkappe zumindest eine zentrale Öffnung mit einem ersten Durchmesser aufweist, und als einen weiteren Schritt das Anordnen einer über einen Luftdüsenring am Grundkörper anordenbaren Niederdruck-Luftkappe, wobei die Niederdruck-Luftkappe zumindest eine zentrale Öffnung mit einem zweiten Durchmesser aufweist und wobei der zweite Durchmesser größer ist als der erste Durchmesser der Hochdruck-Luftkappe. Da die zentrale Öffnung der Luftkappe der Niederdruck-Düsenanordnung einen größeren Durchmesser aufweist als die zentrale Öffnung der Luftkappe der Hochdruck-Düsenanordnung ist - bei im Wesentlichen gleichbleibendem Außendurchmesser des vorderen Endes der Materialdüse - der Ringspalt zwischen Materialdüse und Luftkappe, aus dem die Zerstäuberluft austritt, bei der Niederdruck-Düsenanordnung größer als bei der Hochdruck-Düsenanordnung. Auch deshalb ist der Druck in der Luftkappe in der Niederdruck-Düsenanordnung geringer und der Volumenstrom der ausströmenden Luft größer als bei der Hochdruck-Düsenanordnung.

Das erfindungsgemäße Verfahren zum Umrüsten einer Spritzpistole, insbesondere Farbspritzpistole, mit einem ersten Düseninnendruck zu einer Spritzpistole, insbesondere Farbspritzpistole, mit einem zweiten Düseninnendruck, wobei der erste Düseninnendruck kleiner ist als der zweite Düseninnendruck, umfasst vorzugsweise als einen Schritt das Entfernen einer über einen Luftdüsenring am Grundkörper angeordneten Niederdruck-Luftkappe, wobei die Niederdruck-Luftkappe zumindest eine zentrale Öffnung mit einem ersten Durchmesser aufweist, und als einen weiteren Schritt das Anordnen einer über einen Luftdüsenring am Grundkörper anordenbaren Hochdruck-Luftkappe, wobei die Hochdruck-Luftkappe zumindest eine zentrale Öffnung mit einem zweiten Durchmesser aufweist und wobei der zweite Durchmesser kleiner ist als der erste Durchmesser der Niederdruck-Luftkappe.

Das erfindungsgemäße Verfahren zum Umrüsten einer Spritzpistole, insbesondere Farbspritzpistole, kann auch als Verfahren zum Umrüsten eines Grundkörpers einer Spritzpistole, insbesondere Farbspritzpistole, angesehen werden.

Die erfindungsgemäßen Verfahren zum Umrüsten einer Spritzpistole können als weiteren Schritt das Ausliefern der Spritzpistole an einen Kunden und/oder das Benutzen des Grundkörpers bzw. der Spritzpistole umfassen.

Die Ausführungen zum Grundkörper, zur erfindungsgemäßen Spritzpistole und zu den erfindungsgemäßen Verfahren zum Umrüsten einer Spritzpistole, insbesondere die Ausführungen zu den Komponenten, können übergreifend gelten, d.h. die Ausführungen zum Grundkörper können auch für die erfindungsgemäße Spritzpistole oder für die erfindungsgemäßen Verfahren gelten usw.

Mit der erfindungsgemäßen Spritzpistole, insbesondere Farbspritzpistole, kann nicht nur Farbe sondern auch Klebstoff oder Lack, insbesondere Basis- und Klarlack, sowohl auf Lösemittelbasis als auch auf Wasserbasis, verspritzt werden, ebenso Flüssigkeiten für die Nahrungsmittelindustrie, Holzschutzmittel oder andere Flüssigkeiten. Bei der erfindungsgemäßen Spritzpistole kann es sich insbesondere um eine Handspritzpistole oder um eine Automatik- bzw. Roboterpistole handeln. Handspritzpistolen werden vor allem von Handwerkern, insbesondere von Malern, Schreinern und Lackierern verwendet. Automatik- und Roboterpistolen werden in der Regel in Verbindung mit einem Lackierroboter oder einer Lackiermaschine für industrielle Anwendungen genutzt. Allerdings ist es durchaus denkbar, auch eine Handspritzpistole in einen Lackierroboter oder in eine Lackiermaschine zu integrieren.

Die erfindungsgemäße Spritzpistole und die erfindungsgemäßen Verfahren können für alle Arten von Spritzpistolen Anwendung finden, insbesondere jedoch für luftzerstäubende, insbesondere für druckluftzerstäubende, Spritzpistolen.

Die erfindungsgemäße Spritzpistole kann insbesondere die folgenden weiteren Komponenten aufweisen bzw. damit ausstattbar sein: Griff, oberer Pistolenkörper, Druckluftanschluss, Farbnadel, Abzugsbügel zum Öffnen eines Luftventils und zum Herausbewegen der Farbnadel aus der Materialauslassöffnung der Materialdüse, Rund-Breitstrahlregulierungseinrichtung zum Einstellen des Verhältnisses aus Zerstäuberluft und Hornluft zur Formung des Farbstrahls, Luftmikrometer zum Einstellen des Spritzdrucks, Materialmengenreguliereinrichtung zum Einstellen des maximalen Materialvolumenstroms, Materialanschluss, Farbkanäle zum Leiten des zu verspritzenden Materials von einem Materialeinlass zur Materialauslassöffnung, Aufhängehaken und/oder analoge oder digitale Druckmesseinrichtung. Sie kann jedoch auch weitere Komponenten aus dem Stand der Technik aufweisen. Die Farbspritzpistole kann als Fließbecherpistole mit oberhalb des Pistolenkörpers angeordnetem Farbbecher, aus dem das zu verspritzende Material im Wesentlichen durch Gravitation und durch Unterdruck am vorderen Ende der Materialdüse in und durch die Farbkanäle fließt, ausgestaltet sein. Bei der Spritzpistole kann es sich jedoch auch um eine Seitenbecherpistole handeln, bei der der Farbbecher seitlich am Pistolenkörper angeordnet ist, und bei der das Material ebenfalls durch Gravitation und durch Unterdruck am vorderen Ende der Materialdüse der Pistole zugeführt wird. Die Spritzpistole kann jedoch auch als Saug- bzw. Hängebecherpistole mit unterhalb des Pistolenkörpers angeordnetem Farbbecher, aus dem das zu verspritzende Material im Wesentlichen durch Unterdruck, insbesondere durch Ausnutzung des Venturi-Effekts, aus dem Becher gesaugt wird. Ferner kann sie als Druckbecherpistole ausgestaltet sein, bei der der Becher unterhalb, oberhalb oder seitlich am Pistolenkörper angeordnet ist und mit Druck beaufschlagt wird, woraufhin das zu verspritzende Material aus dem Becher herausgedrückt wird. Weiterhin kann es sich um eine Kesselpistole handeln, bei der das zu verspritzende Material mittels eines Schlauchs aus einem Farbbehälter oder über eine Pumpe der Spritzpistole zugeführt wird.

Nachfolgend wird die Erfindung beispielhaft anhand von 18 Figuren näher erläutert. Dabei zeigen:
- **Fig. 1**: einen teilweise in Explosionsansicht gezeigten Teil einer Spritzpistole mit Luftverteiler-Ring gemäß dem in der chinesischen Gebrauchsmusterschrift ZL 2014 2 0431026.7 offenbarten Stand der Technik;
- **Fig. 2**: eine Draufsicht auf einen Kopfbereich eines Grundkörpers einer Spritzpistole gemäß dem in der genannten chinesischen Gebrauchsmusterschrift offenbarten Stand der Technik;
- **Fig. 3**: eine Schnittansicht eines Kopfbereichs einer Spritzpistole gemäß dem in der chinesischen Gebrauchsmusterschrift ZL 2016 2 0911120.1 offenbarten Stand der Technik;
- **Fig. 4**: eine Explosionsansicht eines Ausführungsbeispiels einer erfindungsgemäßen Spritzpistole;
- **Fig. 5**: eine Schnittansicht eines Ausführungsbeispiels eines Grundkörpers für eine Spritzpistole;
- **Fig. 6**: eine Schnittansicht des Kopfbereichs eines Ausführungsbeispiels eines Grundkörpers für eine Spritzpistole;
- **Fig. 7**: eine perspektivische Ansicht auf den Kopfbereich eines Ausführungsbeispiels eines Grundkörpers für eine Spritzpistole;
- **Fig. 8**: eine perspektivische Ansicht auf ein Ausführungsbeispiel einer Düse zur Verwendung in einem Ausführungsbeispiel einer erfindungsgemäßen Spritzpistole;
- **Fig. 9**: eine perspektivische Ansicht auf das Ausführungsbeispiel einer Düse aus Fig. 8 von einer anderen Seite;
- **Fig. 10**: eine Ansicht von hinten auf das Ausführungsbeispiel einer Düse aus Fig. 8;
- **Fig. 11**: eine Schnittansicht des Ausführungsbeispiels einer Düse aus Fig. 8;
- **Fig. 12**: eine Schnittansicht des Kopfbereichs eines Ausführungsbeispiels einer erfindungsgemäßen Spritzpistole mit dem Ausführungsbeispiel einer Düse aus Fig. 8;
- **Fig. 13**: eine perspektivische Ansicht auf ein zweites Ausführungsbeispiel einer Düse zur Verwendung in einem Ausführungsbeispiel einer erfindungsgemäßen Spritzpistole;
- **Fig. 14**: eine perspektivische Ansicht auf das Ausführungsbeispiel einer Düse aus Fig. 13 von einer anderen Seite;
- **Fig. 15**: eine Ansicht von hinten auf das Ausführungsbeispiel einer Düse aus Fig. 13;
- **Fig. 16**: eine Schnittansicht des Ausführungsbeispiels einer Düse aus Fig. 13;
- **Fig. 17**: eine Schnittansicht des Kopfbereichs eines Ausführungsbeispiels einer erfindungsgemäßen Spritzpistole mit dem Ausführungsbeispiel einer Düse aus Fig. 13; und
- **Fig. 18**: eine perspektivische Ansicht auf einen Teil eines Ausführungsbeispiels eines Grundkörpers.

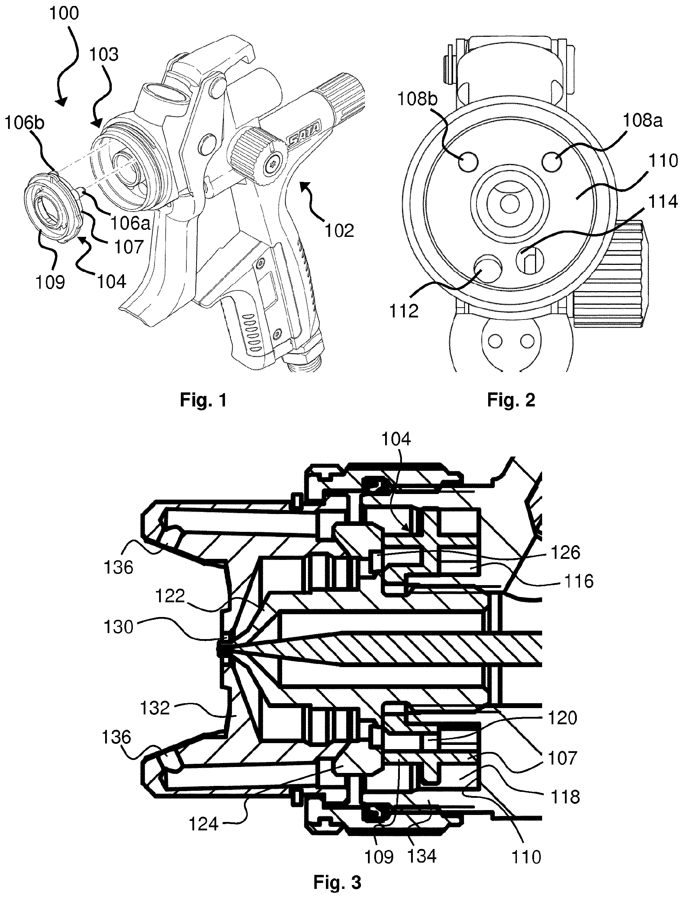

Der in Fig. 1 gezeigte Teil einer Spritzpistole 100, insbesondere Farbspritzpistole, gemäß dem Stand der Technik weist einen Grundkörper 102 mit verschiedenen Anbauteilen auf. Gezeigt ist ein Luftverteiler-Ring 104, der am Kopfbereich 103 des Grundkörpers 102 anordenbar ist. Hierzu weist der Luftverteiler-Ring 104 zumindest einen, im vorliegenden Beispiel zwei, Haltepins 106a und 106b auf, die in zwei mit den Haltepins 106a und 106b korrespondierende Sacklöcher 108a und 108b, die in Fig. 2 dargestellt sind, gesteckt werden, um den Luftverteiler-Ring 104 derart am Pistolenkopf bzw. am Kopfbereich 103 des Grundkörpers 102 zu befestigen, dass die Wandung 107 des Luftverteiler-Rings 104 an der Frontfläche 110 des Kopfbereichs 103 des Grundkörpers 102 dichtend anliegt, was in Fig. 3 gezeigt ist. Der in Fig. 3 gezeigte Kopfbereich 103 ist in der chinesischen Gebrauchsmusterschrift ZL 2016 2 0911120.1 offenbart. Eine Zerstäuberluft-Auslassöffnung 114 in der Frontfläche 110 des Kopfbereichs 103 des Grundkörpers 102 liegt dabei innerhalb der Wandung 107 des Luftverteiler-Rings 104. Aus der Zerstäuberluft-Auslassöffnung 114 strömt Zerstäuberluft in eine innere Luftverteilerkammer 116, die durch den Luftverteiler-Ring 104 und den Grundkörper 102 gebildet wird. Eine Hornluft-Auslassöffnung 112 in der Frontfläche 110 des Kopfbereichs 103 des Grundkörpers 102 liegt außerhalb der Wandung 107 des Luftverteiler-Rings 104. Aus der Hornluft-Auslassöffnung 112 strömt Hornluft in eine äußere Luftverteilerkammer 118 des Luftverteiler-Rings 104.

Auf einer Fläche innerhalb der Wandung 107 weist der Luftverteiler-Ring 104 über seinen Umfang verteilt mehrere Durchlässe 120 auf, durch die die Zerstäuberluft aus der inneren Luftverteilerkammer 116 strömt. Von den Durchlässen 120 strömt die Zerstäuberluft zu einem an der Farbdüse 122 einstückig angeordneten Teller 124, der dichtend auf einer Wandung 109 des Luftverteiler-Rings 104 anliegt, wobei die Wandung 109 auf der der Frontfläche 110 des Kopfbereichs 103 des Grundkörpers 102 abgewandten Seite des Luftverteiler-Rings 104 angeordneten ist. Der Teller 124 weist über seinen Umfang verteilt eine Mehrzahl an Durchgangsbohrungen 126 auf. Die die Durchgangsbohrungen 126 durchströmte Luft strömt anschließend durch einen Ringspalt 130 zwischen der zentralen Öffnung der Luftkappe 132 und dem vorderen Ende der Farbdüse 122, das in Form eines Zäpfchens ausgestaltet sein kann.

Die äußere Luftverteilerkammer 118 des Luftverteiler-Rings 104 bildet zusammen mit einer äußeren Wandung 134 am Kopfbereich 103 des Grundkörpers 102 einen Spalt, durch den die Hornluft aus der äußeren Luftverteilerkammer 118 strömt. Von dort aus strömt die Luft in die Hornluftzuführkanäle in der Luftkappe 132 und anschließend in die Hornluftbohrungen 136, aus deren Öffnungen die Luft austritt.

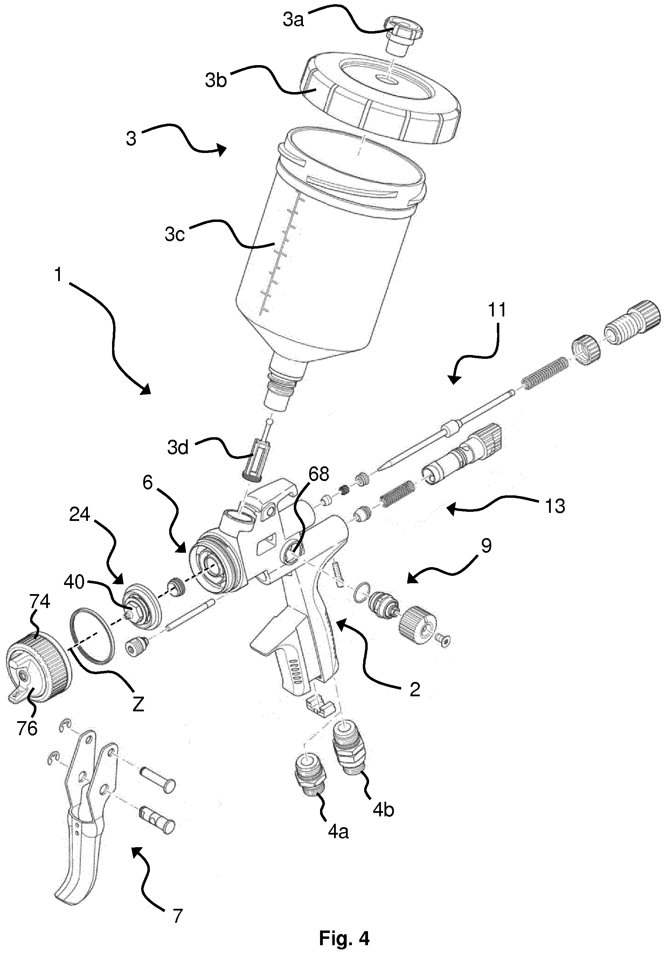

Fig. 4 zeigt eine Explosionsansicht eines Ausführungsbeispiels einer erfindungsgemäßen Spritzpistole 1. Die Spritzpistole 1 kann einen Becher 3 zur Aufnahme und Abgabe des zu verspritzenden Materials aufweisen, wobei der Becher einen Deckel 3b mit einem Ventilstopfen 3a, einen Becherkörper 3c und einen Stecksieb 3d umfasst. Ferner kann die Spritzpistole 1 eine Materialmengenreguliereinrichtung 11, ein Luftmikrometer 13, eine Rund-Breitstrahlregulierungseinrichtung 9, ein Abzugsbügelsystem 7 bestehend aus Abzugsbügel und Befestigungsmitteln, und einen Luftanschluss, der als Standard-Anschluss 4a oder als Drehgelenk-Anschluss 4b ausgestaltet sein kann, umfassen. Am Kopfbereich 6 des Grundkörpers 2 ist eine Düsenanordnung bestehend aus einer Düse 24, die eine Materialdüse 40 umfassen kann, anordenbar. Die Düsenanordnung kann außerdem eine Luftkappe 76 umfassen, die über einen Luftdüsenring 74 am Kopfbereich 6 befestigbar, insbesondere anschraubbar, ist. Der Kopfbereich 6, die Düse 24, und die Luftkappe 76 mit Luftdüsenring 74 sind vorliegend koaxial entlang einer Achse Z angeordnet bzw. anordenbar, welche vorliegend die oben genannte Zentral- bzw. Längsachse des Kopfbereichs 6 des Grundkörpers 2, die Zentral- bzw. Längsachse der Materialdüse 40, die Zentral- bzw. Längsachse des oberen Teils des Grundkörpers 2 und die Zentral- bzw. Längsachse einer Aufnahmeöffnung zur Aufnahme der Materialmengenreguliereinrichtung 11 darstellt.

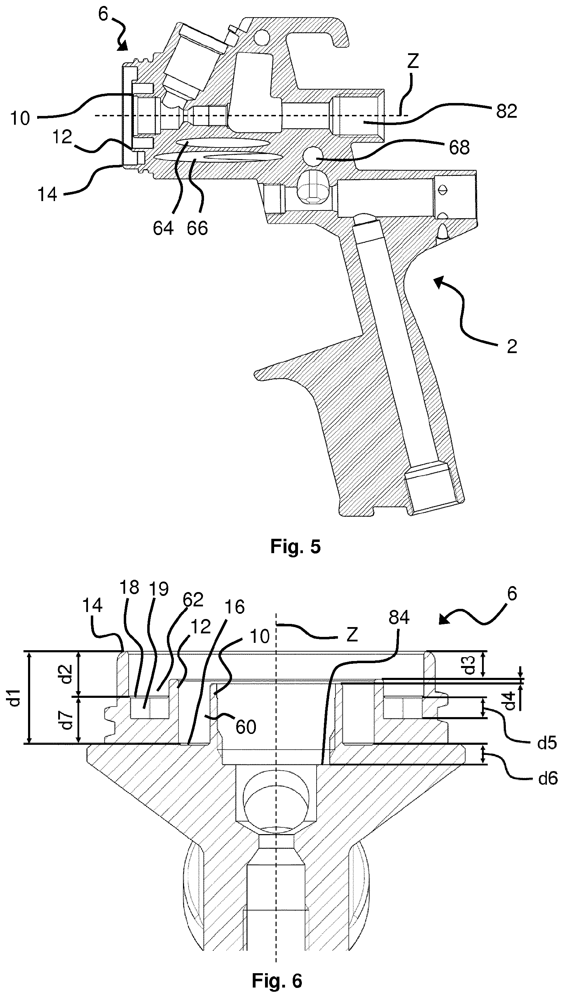

In Fig. 5 ist eine Schnittansicht des Ausführungsbeispiels eines Grundkörpers 2 für eine Spritzpistole aus Fig. 4 dargestellt, wobei der Schnitt von oben nach unten durch die Achse Z aus Fig. 4 erfolgte. Der Grundkörper 2 weist eine Vielzahl an Bohrungen auf; im oberen Teil des Grundkörpers 2 insbesondere eine Mehrzahl an Bohrungen entlang einer Achse Z, welche vorliegend die oben genannte Zentral- bzw. Längsachse des Kopfbereichs 6 des Grundkörpers 2 darstellt. Im vorliegenden Ausführungsbeispiel ist diese Achse gleich der Zentral- bzw. Längsachse der in oder am Grundkörper 2 anordenbaren Materialdüse 40 aus Fig. 4 und gleich der Zentral- bzw. Längsachse des oberen Teils des Grundkörpers 2 und gleich der Zentral- bzw. Längsachse einer Aufnahmeöffnung 82 zur Aufnahme einer in Fig. 4 beispielhaft gezeigten Materialmengenreguliereinrichtung 11.

Wenn oben beschrieben ist, dass das vordere Ende einer Wandung entlang einer Achse gegenüber dem vorderen Ende einer anderen Wandung zurückgesetzt ist, so ist entlang einer Achse die Achse Z gemeint. Wie in Fig. 5 erkennbar, ist die mittlere Wandung 12 deutlich gegenüber der äußeren Wandung 14 zurückgesetzt. Als "vorne" wird dabei die Spritzrichtung bzw. die Seite des Grundkörpers 2 angesehen an dem die Materialdüse 40 aus Fig. 4 anordenbar ist, als "hinten" die Gegenseite bzw. Gegenrichtung, hier die Seite mit der Aufnahmeöffnung 82. Dass das vordere Ende der mittleren Wandung 12 entlang einer Achse Z gegenüber dem vorderen Ende der äußeren Wandung 14 "zurückgesetzt" ist, bedeutet, dass das vordere Ende der äußeren Wandung 14 weiter vorne ist als das vordere Ende der mittleren Wandung 12.

Die innere Wandung 10 ist im vorliegenden Ausführungsbeispiel nur leicht gegenüber der mittleren Wandung 12 zurückgesetzt.

In der Fig. 5 ist lediglich ein einziger Zerstäuberluftkanal 64 zu sehen und ein Hornluftkanal 66 erkennbar, der sich mit einem zweiten Hornluftkanal schneidet. Die Schnittansicht zeigt außerdem einen Teil einer Rund-Breitstrahl-Luftverteilerkammer 68.

Fig. 6 zeigt eine Schnittansicht eines Teils des Ausführungsbeispiels eines Grundkörpers 2 für eine Spritzpistole 1, welches in Fig. 5 in einer anderen Schnittansicht gezeigt ist. Der in Fig. 6 gezeigte Schnitt erfolgte erneut durch die Achse Z aus Fig. 4, jedoch entlang einer Schnittebene, welche zu der in Fig. 5 angewandten Schnittebene senkrecht steht. In der vorliegenden Fig. 6 ist zu erkennen, dass die innere Wandung 10 des Kopfbereichs 6 des Grundkörpers 2 der Spritzpistole 1 gegenüber der mittleren Wandung 12 entlang der Achse Z um einen Abstand d4 zurückgesetzt ist. Die mittleren Wandung 12 wiederum ist entlang der Achse Z um einen Abstand d3 gegenüber der äußeren Wandung 14 zurückgesetzt. Anders ausgedrückt überragt die äußere Wandung 14 die mittleren Wandung 12, welche wiederum die innere Wandung 10 überragt. Die innere Wandung 10 und die äußere Wandung 12 grenzen eine erste Luftverteilerkammer 60 ab, die mittlere Wandung 12 und die äußere Wandung 14 grenzen eine zweite Luftverteilerkammer 62 ab. Nach vorne hin, d.h. in Spritzrichtung, sind die Luftverteilerkammern 60 und 62 offen, nach hinten hin sind sie zumindest bereichsweise durch eine erste Frontfläche 16 bzw. eine zweite Frontfläche 18 begrenzt. In die zweite Frontfläche 18 ist im vorliegenden Ausführungsbeispiel eine Nut 19 eingebracht, deren Bodenfläche die Luftverteilerkammer 62 anstelle der zweite Frontfläche 18 bereichsweise nach hinten begrenzt. Die Luftverteilerkammer 62 wird nach hinten hin also bereichsweis durch die zweite Frontfläche 18 und bereichsweise durch die Bodenfläche der Nut 19 begrenzt. Der Abstand d5, d.h. die Tiefe der Nut 19, d.h. der Abstand zwischen zweiter Frontfläche 18 und der Bodenfläche der Nut 19 kann beispielsweise ca. 1,5 mm bis 3,0 mm betragen. Der Abstand d1 zwischen erster Frontfläche 16 und vorderem Ende der äußeren Wandung 14 beträgt vorzugsweise zwischen 8 mm und 12 mm, besonders bevorzugt zwischen 9 mm und 11 mm. Der Abstand d2 zwischen zweiter Frontfläche 18 und vorderem Ende der äußeren Wandung 14 beträgt vorzugsweise zwischen 4 mm und 6 mm. Die mittlere Wandung 12 ist vorliegend gegenüber der äußeren Wandung 14 entlang der Achse Z um einen Abstand d3, der vorzugsweise ca. 2 mm bis 4 mm beträgt, zurückgesetzt. Die innere Wandung 10 ist bevorzugt nur um 0,1 mm bis 1,0 mm gegenüber der mittleren Wandung 12 zurückgesetzt. Dabei handelt es sich um den Abstand d4. Das in Fig. 6 gezeigte Ausführungsbeispiel eines Kopfbereichs 6 eines Grundkörpers weist eine Gegendichtfläche 84 für eine in Fig. 6 nicht gezeigte Düsendichtung auf. Der Abstand d6 dieser Gegendichtfläche 84 zur ersten Frontfläche 16 beträgt vorzugsweise etwa 1,5 mm bis 3,0 mm. Die erste Frontfläche 16 ist gegenüber der zweiten Frontfläche 18 entlang der Achse Z zurückgesetzt. Im vorliegenden Ausführungsbeispiel beträgt der Abstand d7, um den die Frontfläche 16 gegenüber der zweiten Frontfläche 18 zurückgesetzt ist, ca. 4 mm bis 6 mm. Die genannten Maße bzw. Maßkombinationen haben sich in Spritzversuchen als vorteilhaft für eine gute Zerstäubungsqualität erwiesen.

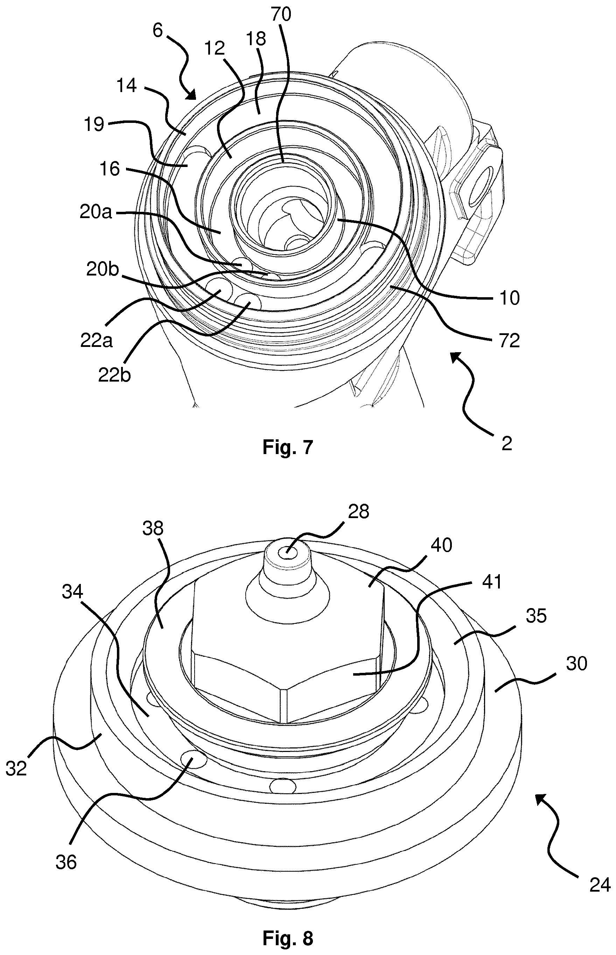

In Fig. 7 ist eine perspektivische Ansicht eines Teiles des Ausführungsbeispiels eines Grundkörpers 2 aus Fig. 5 und Fig. 6 gezeigt. Insbesondere die Nut 19 in der zweiten Frontfläche 18 ist hier gut zu erkennen. Die Breite der Nut 19 weist ungefähr die gleiche Breite auf wie die zweite Frontfläche 18. Unter der Breite der Nut 19 bzw. der zweiten Frontfläche 18 ist dabei jeweils die Ausdehnung in radialer Richtung des Kopfbereichs 6 des Grundkörpers 2 zu verstehen oder auch der Abstand zwischen mittlerer Wandung 12 und äußerer Wandung 14 in radialer Richtung. In Umfangsrichtung erstreckt sich die Nut 19 über rund 50 % des Umfangs der zweiten Frontfläche 18, d.h. vorliegend über rund 180 %.

Die innere Wandung 10, die mittlere Wandung 12 und die äußere Wandung 14 sind jeweils kreisrund ausgestaltet und konzentrisch zueinander und koaxial zur Achse Z aus den vorherigen Zeichnungen angeordnet. Die Achse Z verläuft durch die Rotationsachse der Wandungen, die Wandungen verlaufen parallel zur Achse Z. Die innere Wandung 10 weist vorliegend ein Innengewinde 70 auf, in das eine in Fig. 7 nicht gezeigte Düse, insbesondere eine Materialdüse, die häufig auch als Farbdüse bezeichnet wird, eingeschraubt werden kann. Die äußere Wandung 14 weist vorliegend ein Außengewinde 72 auf, über das ein in Fig. 7 nicht gezeigter Luftdüsenring mit Luftkappe am Kopfbereich 6 des Grundkörpers 2 aufgeschraubt werden kann. Die mittlere Wandung 12 weist vorliegend kein Gewinde auf. Es ist jedoch denkbar, dass auch die mittlere Wandung 12 ein Innen- oder Außengewinde aufweisen kann. Ferner ist es denkbar, dass die äußere Wandung 14 ein Innengewinde zum Einschrauben einer Komponente, insbesondere einer Luftkappe, und die innere Wandung 10 ein Außengewinde zum Aufschrauben einer Komponente, insbesondere einer Düse, aufweist.

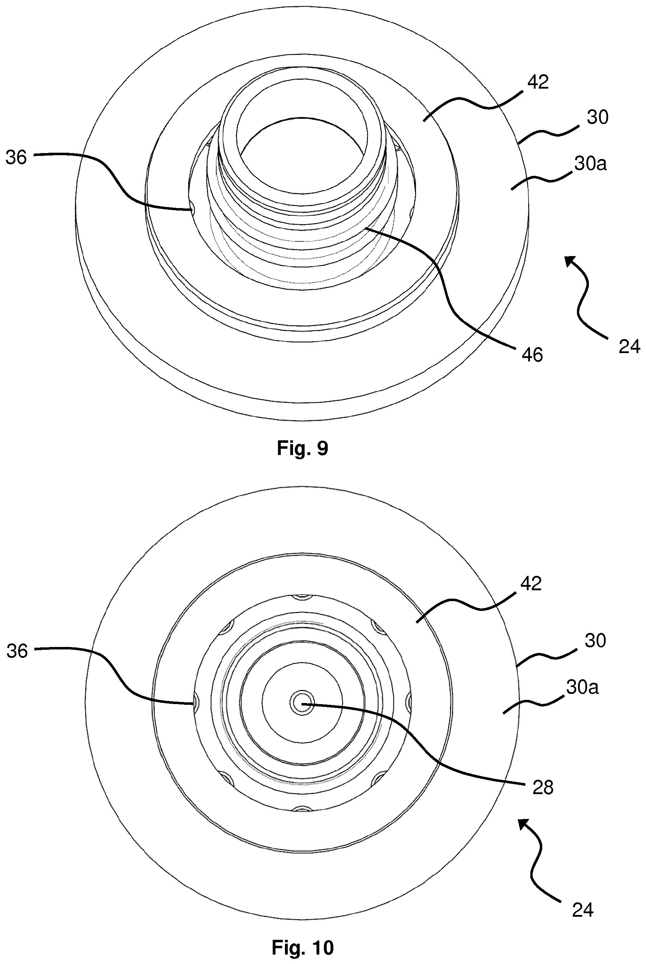

Die erste Frontfläche 16 weist vorliegend zwei innere Luftauslassöffnungen 20a und 20b auf, die zweite Frontfläche 18 weist vorliegend zwei äußere Luftauslassöffnungen 22a und 22b auf. Der Durchmesser der Luftauslassöffnungen 20a, 20b, 22a und 22b entspricht nahezu der Breite der Frontflächen 16, 18 bzw. der Nut 19 in die sie eingebracht sind. Damit kann der zur Verfügung stehende Platz für einen maximalen Luftdurchsatz ausgenutzt werden. Fig. 8 zeigt eine perspektivische Ansicht auf ein Ausführungsbeispiel einer Düse 24 zur Verwendung in einem Ausführungsbeispiel einer erfindungsgemäßen Spritzpistole oder auch zur Verwendung in einem erfindungsgemäßen Verfahren. Die Düse 24 kann zumindest eine Materialdüse 40 mit einer Materialauslassöffnung 28 und einem Abschnitt zum Anlegen eines Werkzeugs, vorliegend ein Außensechskantprofil 41, sowie ein Scheibenelement 32 mit einer Frontfläche 34 und einer Konusfläche 35 aufweisen. Die Frontfläche 34 weist vorliegend mehrere, vorzugsweise 7 bis 9, über den Umfang verteilte Durchgangsöffnungen 36 auf. Materialdüse 40 und Scheibenelement 32 sind bevorzugt einstückig ausgestaltet. Daran angeordnet, vorzugsweise unverlierbar angeordnet, besonders bevorzugt aufgepresst, ist eine erste Prallscheibe 30. An dieser wiederum angeordnet, vorzugsweise einstückig angeordnet, ist eine in Fig. 9 erkennbare zweite Prallscheibe 42. Diese ist an der der Materialauslassöffnung 28 abgewandten Seite der ersten Prallscheibe 30 angeordnet. Wie die erste Prallscheibe 30 ist auch die zweite Prallscheibe 42 ringförmig mit einem inneren und einem äußeren Umfang ausgestaltet. In radialer Richtung reicht der Innenumfang der zweiten Prallscheibe 42 nicht bis zum Außengewinde 46 der Materialdüse 40, sodass ein Spalt zwischen dem Innenumfang der zweiten Prallscheibe 42 und dem Außengewinde 46 der Materialdüse 40 besteht. Entlang einer Achse, d.h. entlang der Zentral- bzw. Längsachse der Düse 24, ist die zweite Prallscheibe 42 von den Durchgangsöffnungen 36 beabstandet. In radialer Richtung überdeckt die zweite Prallscheibe 42 die Durchgangsöffnungen 36 fast vollständig, wie in Fig. 10 gut erkennbar ist. In Fig. 10 außerdem erkennbar sind die Materialauslassöffnung 28 und die Prallfläche 30a der ersten Prallscheibe 30. Bevorzugt weist das Scheibenelement 32 auf seiner der Materialauslassöffnung 28 abgewandten Seite einen Einstich bzw. eine Nut auf, in der die Durchgangsöffnungen 36 angeordnet sind. Dadurch steigt der Abstand zwischen der der Materialauslassöffnung 28 abgewandten Seite des Scheibenelements 32 und der dieser Seite zugewandten Seite der zweiten Prallscheibe 42 und die Luft die in diesen Bereich strömt hat mehr Volumen zur Verfügung, um sich zu verteilen.

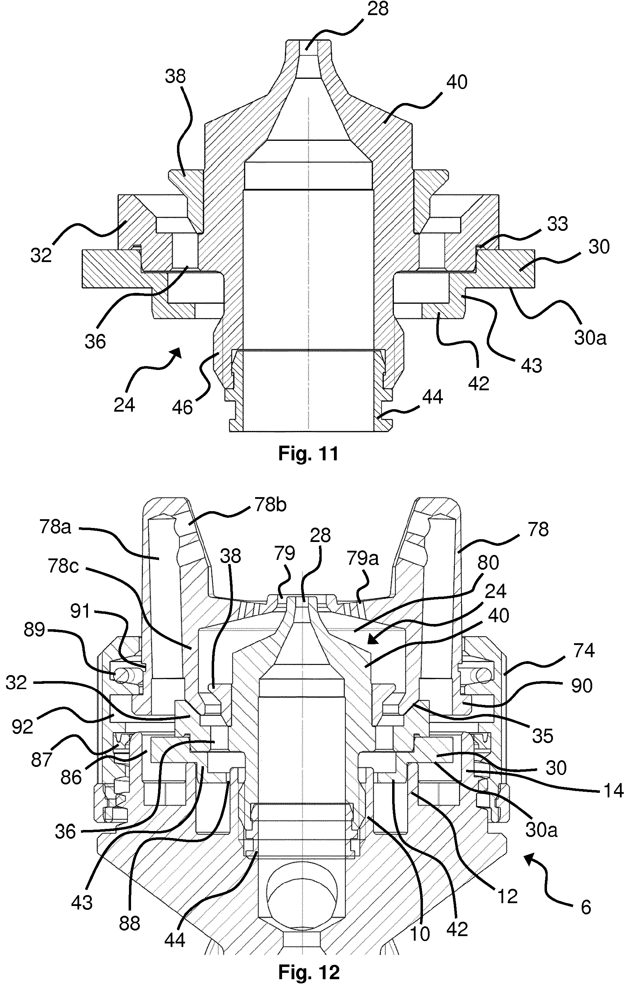

Fig. 11 zeigt den Aufbau der Düse 24 in einer Schnittansicht. Es ist erkennbar, dass die Materialdüse 40 mit ihrer Materialauslassöffnung 28 und das Scheibenelement 32 einstückig ausgestaltet sind. An seiner der Materialauslassöffnung 28 abgewandten Seite weist das Scheibenelement 32 eine umlaufende Nut 33 auf, die das Aufpressen der ersten Prallscheibe 30 auf das Scheibenelement 32 ermöglicht bzw. erleichtert. Die erste Prallscheibe 30 weist einen inneren Umfang und einen äußeren Umfang auf, wobei der äußere Umfang der ersten Prallscheibe 30 größer ist als der äußere Umfang des Scheibenelements 32. Der innere Umfang der ersten Prallscheibe 30 reicht in etwa bis zu den Durchgangsöffnungen 36 des Scheibenelements 32. An der ersten Prallscheibe 30 einstückig angeordnet ist die zweite Prallscheibe 42. Dazwischen kann ein Kragen 43 angeordnet sein. Die erste Prallscheibe 30, die zweite Prallscheibe 42 und ggf. der Kragen 43 bilden vorliegend eine Z-Form. Die erste Prallscheibe 30 kann auf ihrer der Materialauslassöffnung 28 zugewandten Seite, insbesondere im Bereich des inneren Umfangs, eine Aussparung aufweisen, so dass eine Stufenform ausgebildet ist, die den Kontaktbereich zwischen erster Prallscheibe 30 und Scheibenelement 32 bilden kann. Das Scheibenelement 32 weist vorliegend an seiner der Materialauslassöffnung 28 abgewandten Seite, insbesondere im Bereich des äußeren Umfangs, ebenfalls eine Stufe auf, welche den Kontaktbereich zwischen erster Prallscheibe 30 und Scheibenelement 32 bildet.

Die Materialdüse 40 ist vorliegend mit einer Luftleitscheibe 38 ausgestattet, welche ebenfalls unverlierbar mit der Materialdüse 40 verbunden, insbesondere aufgepresst sein kann. Außerdem weist die vorliegende Düse 24 eine Düsendichtung 44 auf, deren Zweck weiter unten erläutert wird. Die Düsendichtung 44 besteht bevorzugt aus Kunststoff und ist vorzugsweise auswechselbar mit der Materialdüse 40 verbunden. In Fig. 11 ist ferner das Außengewinde 46 der Materialdüse 40 angedeutet.

Fig. 12 zeigt eine Schnittansicht des Kopfbereichs 6 eines Ausführungsbeispiels einer erfindungsgemäßen Spritzpistole mit dem Ausführungsbeispiel einer Düse 24 aus Fig. 8 bis Fig. 11 im Zusammenbauzustand. Die Düse 24, die vorliegend als Einheit aus Materialdüse 40 mit Scheibenelement 32, erster Prallscheibe 30, zweiter Prallscheibe 42, Luftleitscheibe 38 und Düsendichtung 44 vorliegt, wird über die oben beschriebenen Gewinde in den Grundkörper bzw. in dessen Kopfbereich eingeschraubt. Der Anschlag wird dabei durch die erste Prallscheibe 30, insbesondere deren Prallfläche 30a, und die mittlere Wandung 12 des Kopfbereichs 6 des Grundkörpers gebildet. Die Prallfläche 30a der ersten Prallscheibe 30 wirkt dabei als Dichtfläche und die mittlere Wandung 12, insbesondere das vordere Ende der mittleren Wandung 12, als Gegendichtfläche an der die Prallfläche 30a dichtend anliegt. Alternativ oder zusätzlich kann auch die Außenfläche der zweiten Prallscheibe 42 bzw. die Außenfläche des Kragens 43 zwischen erster Prallscheibe 30 und zweiter Prallscheibe 42 an einer inneren Fläche der mittleren Wandung 12 dichtend anliegen.

Die Düsendichtung 44 ist bei eingeschraubter Düse 24 gegen eine Gegendichtfläche 84, die in Fig. 6 gezeigt ist, gepresst und dichtet den materialführenden Bereich der Spritzpistole, insbesondere den Übergangsbereich zwischen Farbkanal im Grundköper und hohlem Abschnitt der Materialdüse 40 zur Durchleitung des zu verspritzenden Materials, gegenüber dem luftführenden Bereich der Spritzpistole ab.

Im Einbauzustand bildet die erste Prallscheibe 30 mit der äußeren Wandung 14 eine Spalt 86, der bevorzugt einen Ringspalt mit im Wesentlichen konstanter Breite darstellt. Die zweite Prallscheibe 42 bildet mit der inneren Wandung 10 einen weiteren Spalt 88, welcher ebenfalls bevorzugt einen Ringspalt mit im Wesentlichen konstanter Breite darstellt.

Über die oben bereits erwähnten Gewinde ist der Luftdüsenring 74 am Kopfbereich 6 des Grundkörpers anordenbar. Im Luftdüsenring 74 ist die Luftkappe 78 angeordnet, wobei die Luftkappe 78 in einer ersten Richtung mittels eines Flanschs 90, der an einem Vorsprung an der Innenfläche des Luftdüsenrings 74 anliegt, fixiert wird. In die Gegenrichtung wird die Luftkappe 78 über einen Sicherungsring 89, der in einer Nut 91 in der Luftkappe 78 und in einer Aussparung in der Innenfläche des Luftdüsenrings 74 liegt, begrenzt. Lediglich zur besseren Erkennbarkeit ist der Sicherungsring 89 in der vorliegenden Fig. 12 außerhalb der Nut 91 dargestellt, wobei sich der Sicherungsring 89 auch nicht vollständig in der Nut 91 befinden muss. Beispielsweise kann der Sicherungsring 89 mehreckig ausgestaltet sein, so dass er nur bereichsweise in der kreisförmigen Nut 91 liegt.

Wie in Fig. 7 erkennbar, weisen die erste Frontfläche 16 zwischen innerer Wandung 10 und mittlerer Wandung 12 und die zweite Frontfläche 18 zwischen mittlerer Wandung 12 und äußerer Wandung 14 im vorliegenden Ausführungsbeispiel des Grundkörpers jeweils zwei Luftauslassöffnungen 20a und 20b bzw. 22a und 22b auf. Wieder bezugnehmend auf Fig. 12 ist ersichtlich, dass die aus den beiden inneren Luftauslassöffnungen 20a und 20b zwischen innerer Wandung 10 und mittlerer Wandung 12 ausströmende Luft zunächst auf die zweite Prallscheibe 42 trifft. Aufgrund der Engstelle in Form des Spalts 88 verteilt sich die Luft über den Umfang der Luftverteilerkammer zwischen innerer Wandung 10 und mittlerer Wandung 12. Die Luft strömt durch den Spalt 88 und wird dadurch gedrosselt, bevor sie durch die Durchgangsöffnungen 36 des Scheibenelements 32 strömt. Die in gewisser Weise "punktuell" aus den Durchgangsöffnungen 36 austretende Luft trifft auf das Luftleitelement 38, wodurch die Luft flächiger verteilt, homogenisiert und durch die leichte Verengung zwischen Luftleitelement 38 und Innenfläche der Luftkappe 78 erneut leicht gedrosselt wird. Aus der Luftkappen-Kammer 80 zwischen Luftkappe 78 und Materialdüse 40 strömt die Luft sodann durch einen Spalt, insbesondere Ringspalt, der dadurch entsteht, dass das vordere Ende der Materialdüse 40 von innen in die zentrale Öffnung 79 in der Luftkappe 78 hineinragt. Das aus einer Materialzuführeinrichtung durch den Farbkanal im Grundkörper der Spritzpistole und den hohlen Abschnitt der Materialdüse 40 strömende zu verspritzende Material wird von der aus dem Spalt strömenden Luft zerstäubt, wodurch der sogenannte Spritzstrahl gebildet wird. Die Luft mit dem eben beschriebenen Verlauf wird daher als Zerstäuberluft bezeichnet. Die beiden inneren Luftauslassöffnungen 20a und 20b zwischen innerer Wandung 10 und mittlerer Wandung 12 können als Zerstäuberluft-Auslassöffnungen, die dahinterliegenden Luftkanäle als Zerstäuberluftkanäle und die Luftverteilerkammer die durch die innere Wandung 10 und die mittlere Wandung 12 begrenzt kann als Zerstäuberluftverteilerkammer bezeichnet werden. Der von der Zerstäuberluft durchströmte Bereich kann als Zerstäuberluftbereich bezeichnet werden.

Die aus den beiden äußeren Luftauslassöffnungen 22a und 22b, die in dem in Fig. 12 gezeigten Ausführungsbeispiel des Grundkörpers zwar vorhanden, aber in Fig. 7 besonders gut zu sehen sind, ausströmende Luft trifft zunächst auf die erste Prallscheibe 30. Aufgrund der Engstelle in Form des Spalts 86 verteilt sich die Luft über den Umfang der Luftverteilerkammer zwischen mittlerer Wandung 12 und äußerer Wandung 14. Die Luft strömt durch den Spalt 86 und wird dadurch gedrosselt. Vorteilhafterweise strömt die Luft anschließend in eine Zwischenkammer 92 und in die Hornluftzuführkanäle 78a in den Hörnern der Luftkappe 78. Von hier aus strömt die Luft aus den Hornluftbohrungen 78b und trifft auf den oben genannten Spritzstrahl und verformt diesen. Insbesondere drückt die aus den Hornluftbohrungen 78b in den sich diametral gegenüberliegenden Hörnern der Luftkappe 78 ausströmende sogenannte Hornluft den Spritzstrahl, der ursprünglich einen kreisrunden Querschnitt besitzt, an zwei sich gegenüberliegenden Seiten zusammen, wodurch ein sogenannter Breitstrahl entsteht. Die Menge der aus den Hornluftbohrungen 78b ausströmende Hornluft, bzw. bereits die Menge der aus den äußeren Luftauslassöffnungen 22a und 22b, welche als Hornluft-Auslassöffnungen bezeichnet werden können, ausströmende Luft, kann über eine beispielhaft in Fig. 4 gezeigte Rund-Breitstrahlregulierungseinrichtung 9 eingestellt werden. Wird die Hornluft auf null oder nahezu null reduziert, erzeugt die Spritzpistole einen sogenannten Rundstrahl mit kreisrundem Querschnitt. Die Luftkanäle hinter den sogenannten Hornluft-Auslassöffnungen können als Hornluftkanäle, die Luftverteilerkammer die durch die die mittlere Wandung 12 und die äußere Wandung 14 begrenzt wird als Hornluftverteilerkammer und der von der Hornluft durchströmte Bereich als Hornluftbereich bezeichnet werden. Zur Abdichtung des Hornluftbereichs gegenüber der Umwelt kann ein Dichtelement 87 zwischen Luftdüsenring 74 und Kopfbereich 6 vorgesehen sein.

In die vordere Fläche der Luftkappe 78, radial außerhalb von der zentralen Öffnung 79, können sogenannte Steueröffnungen 79a eingebracht sein. Die aus den Steueröffnungen 79a austretende Luft beeinflusst die Hornluft, insbesondere schwächt sie den Aufprall der Hornluft auf den Spritzstrahl ab. Ferner schützt die sogenannte Steuerluft die Luftkappe 78 vor Verschmutzung, indem sie Farbtröpfchen von der Luftkappe 78 wegträgt. Außerdem trägt sie zur weiteren Zerstäubung des Spritzstrahls bei. Die Steuerluft wirkt auch auf den Rundstrahl und bewirkt eine leichte Vorverformung sowie auch hier eine zusätzliche Zerstäubung.

Wie in Fig. 12 gut erkennbar, erfolgt die Separierung, insbesondere die Abdichtung, zwischen Zerstäuberluftbereich und Hornluftbereich durch die mittlere Wandung 12, die erste Prallscheibe 30, das Scheibenelement 32 und durch die Luftkappe 78, insbesondere durch einen vorzugsweise umlaufenden Steg 78c der Luftkappe 78. Der Steg 78c weist vorliegend einen konischen Bereich auf, der an der Konusfläche 35 des Scheibenelements 32 anliegt. Dadurch erfolgt auch eine Zentrierung der Luftkappe 78, wodurch gewährleistet ist, dass die Luftkappe 78 und die Materialdüse 40 konzentrisch zueinander angeordnet sind und der oben genannte Spalt, insbesondere Ringspalt, zwischen dem vorderen Ende der Materialdüse 40 und der Luftkappe 78 zum Auslass der Zerstäuberluft eine konstante Breite aufweist.

Es wird deutlich, dass aufgrund der besonderen Ausgestaltung des Grundkörpers und der erfindungsgemäßen Spritzpistole kein zusätzliches Dichtelement zur Abdichtung zwischen Zerstäuberluftbereich und Hornluftbereich notwendig ist. Aufgrund des gegenüber dem vorderen Ende der äußeren Wandung 14 zurückgesetzten vorderen Endes der mittleren Wandung 12 ist die für die Abdichtung zwischen Zerstäuberluftbereich und Hornluftbereich bedeutsame mittlere Wandung 12 des Grundkörpers auch bei abgeschraubter Düse 24 gut vor Beschädigungen geschützt. Ferner bietet der Kopfbereich 6 des Grundkörpers durch diese Ausgestaltung Platz für die erste Prallscheibe 30, die dadurch nicht über die äußere Wandung 14 hervorragt. Der Pistolenkopf kann dadurch sehr kompakt ausgestaltet werden.

Bei der in den Figs. 8 bis 12 gezeigten Düse 24 handelt es sich bevorzugt um eine Niederdruck- bzw. HVLP-Düse, bzw. eine Düse zur Verwendung in einer Niederdruck- bzw. HVLP-Düsenanordnung, insbesondere zur Verwendung in einem erfindungsgemäßen Verfahren zum Umrüsten einer Spritzpistole, insbesondere Farbspritzpistole.

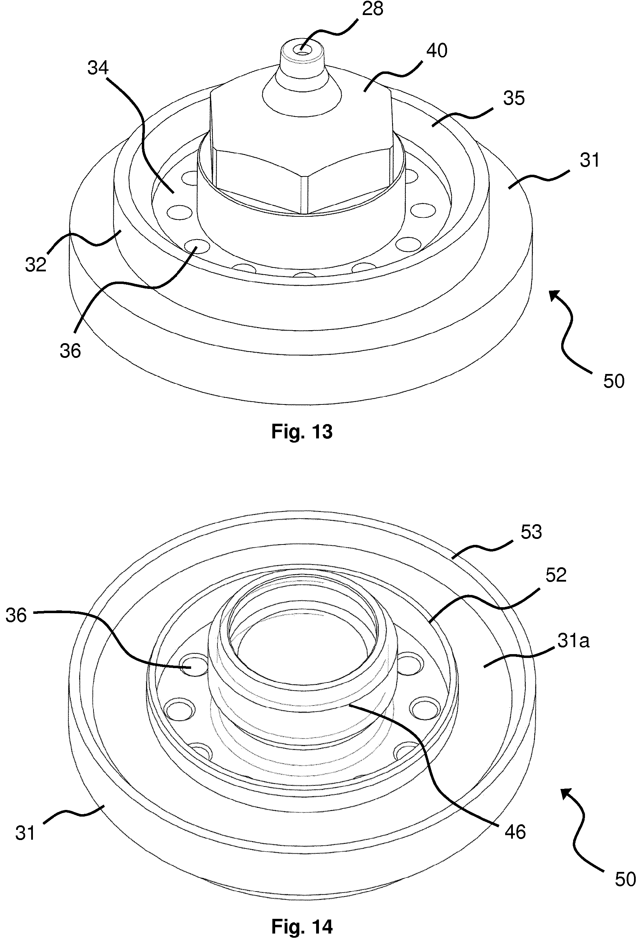

Fig. 13 zeigt eine perspektivische Ansicht auf ein zweites Ausführungsbeispiel einer Düse zur Verwendung in einem Ausführungsbeispiel einer erfindungsgemäßen Spritzpistole oder auch zur Verwendung in einem erfindungsgemäßen Verfahren. Im Vergleich zu dem in den Figs. 8 bis 12 gezeigten ersten Ausführungsbeispiel besitzt die vorliegende Düse 50 keine Luftleitscheibe und das Scheibenelement 32 weist eine größere Anzahl an Durchgangsöffnungen 36 in der Frontfläche 34 auf. Ansonsten weist die Düse 50 auch eine Materialdüse 40 mit einer Materialauslassöffnung 28 auf und das Scheibenelement 32 besitzt eine Konusfläche 35. Bevorzugt weist das Scheibenelement 32 auf seiner der Materialauslassöffnung 28 abgewandten Seite einen Einstich bzw. eine Nut auf, in der die Durchgangsöffnungen 36 angeordnet sind. Dadurch steigt im Einbauzustand der Düse 50 der Abstand zwischen der der Materialauslassöffnung 28 abgewandten Seite des Scheibenelements 32 und der ersten Frontfläche 16 des Kopfbereichs 6 des Grundkörpers 2 und die Luft die in diesen Bereich strömt hat mehr Volumen zur Verfügung, um sich zu verteilen.

Erst in Fig. 14 ist erkennbar, dass die erste Prallscheibe 31 der Düse 50 anders ausgestaltet ist als die erste Prallscheibe 30 der vorher beschriebenen Düse 24. Die Düse 50 weist keine zweite Prallscheibe auf, dafür einen inneren Kragen 52 und einen äußeren Kragen 53 mit einer dazwischenliegenden Prallfläche 31a.

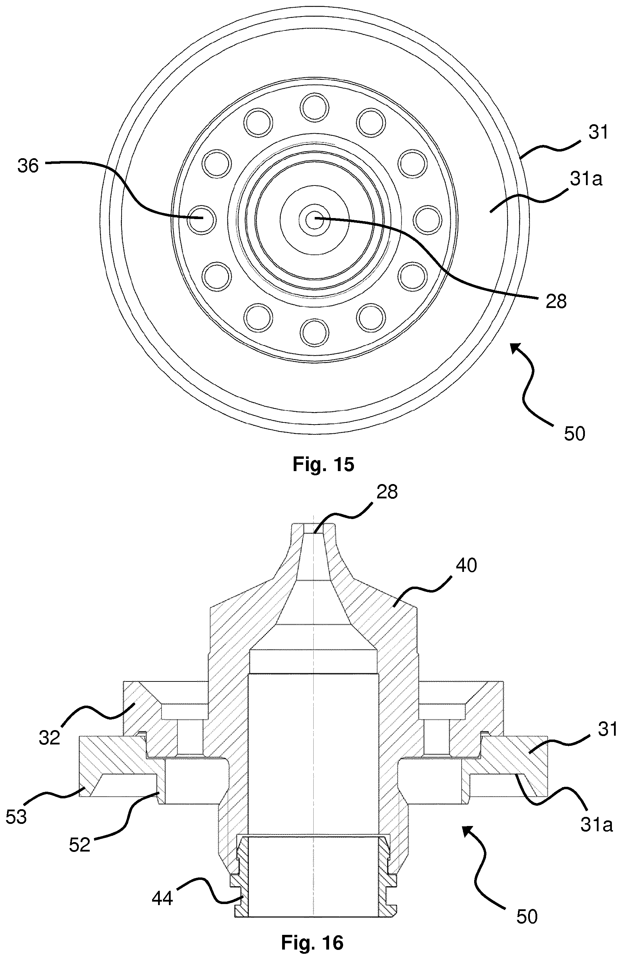

In Fig. 15, die eine Ansicht von hinten auf die Düse 50 zeigt, wird deutlich, dass die Durchgangsöffnungen 36 völlig frei liegen, d.h. nicht von anderen Komponenten der Düse 50 verdeckt bzw. überragt werden. Das Scheibenelement 32 der Düse 50 weist bevorzugt eine höhere Anzahl an Durchgangsöffnungen 36 auf, insbesondere zwischen 10 und 14.

Die freiliegenden Durchgangsöffnungen 36 sind auch in Fig. 16 ersichtlich, bei der es sich um eine Schnittansicht der Düse 50 handelt. Die Materialdüse 40 mit einstückig angeordnetem Scheibenelement 32 und vorzugsweise auswechselbar angeordneter Düsendichtung 44 ist im Wesentlichen identisch mit der Materialdüse 40 mit einstückig angeordnetem Scheibenelement 32 und vorzugsweise auswechselbar angeordneter Düsendichtung 44 der zuvor beschriebenen Düse 24. Die obigen Ausführungen bezüglich dieser Komponenten gelten für die Düse 50 entsprechend. Die erste Prallscheibe 31 mit innerem Kragen 52, äußerem Kragen 53 und dazwischenliegender Prallfläche 31a unterscheidet sich von der ersten Prallscheibe 30 der vorher beschriebenen Düse 24.

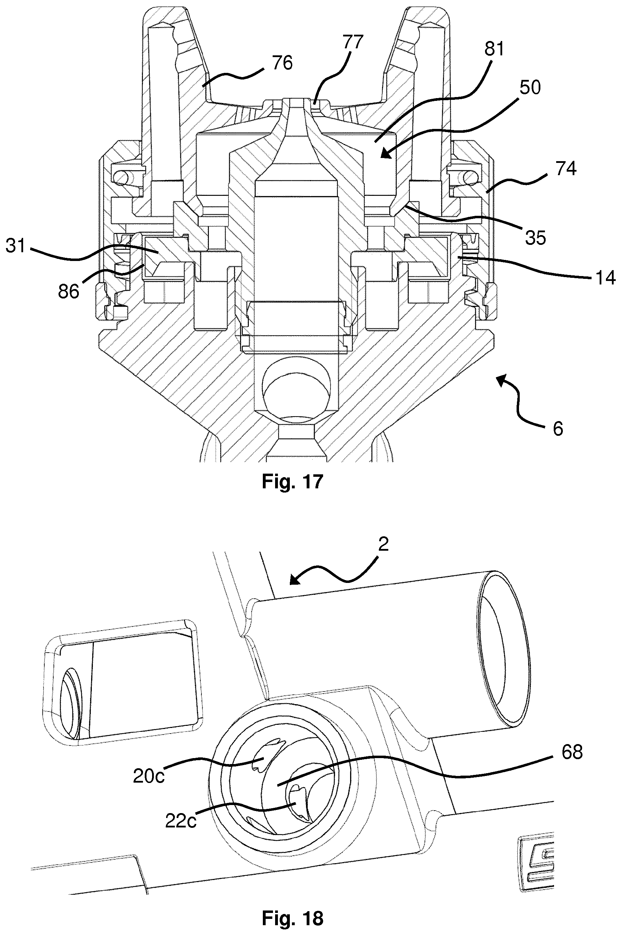

Fig. 17 zeigt eine Schnittansicht des Kopfbereichs 6 eines Ausführungsbeispiels einer erfindungsgemäßen Spritzpistole mit dem Ausführungsbeispiel einer Düse 50 aus den Figs. 13 bis 16. Bei dem Grundkörper handelt es sich um das in Fig. 12 gezeigte Ausführungsbeispiel. Insbesondere der Kopfbereich 6 ist gleich ausgestaltet, weshalb auf die obigen Ausführungen hierzu verweisen werden können. Es ist erkennbar, dass der Spalt 86 zwischen äußerer Wandung 14 und erster Prallscheibe 31 schmaler ist als der Spalt 86 aus Fig. 12, die den mit der zuvor beschriebenen Düse 24 ausgestatteten Kopfbereich 6 des Grundkörpers zeigt. Da es sich um den gleiche Grundkörper mit gleichen Abmessungen, insbesondere mit gleichem Innendurchmesser der äußeren Wandung 14 handelt, wird deutlich, dass die erste Prallscheibe 31 der Düse 50 einen größeren Außendurchmesser aufweist als die erste Prallscheibe 30 der Düse 24. Die übrigen Ausführungen bezüglich der in Fig. 12 gezeigten Anordnung können auch für die in Fig. 17 gezeigte Anordnung gelten.

Durch die bei der Düse 50 im Vergleich zur Düse 24 fehlende zweite Prallscheibe und fehlende Luftleitscheibe wird die Zerstäuberluft in der in Fig. 17 gezeigten Anordnung, d.h. bei Verwendung der Düse 50, weniger stark gedrosselt als bei der in Fig. 12 gezeigten Anordnung, d.h. bei Verwendung der Düse 24. Dadurch ist der Düseninnendruck, d.h. insbesondere der Druck in der Luftkappen-Kammer 81 zwischen Luftkappe 78 und Materialdüse 40 bei Verwendung der Düse 50 größer als der Düseninnendruck, d.h. insbesondere der Druck in der in Fig. 12 gezeigten Luftkappen-Kammer 80 zwischen Luftkappe 78 und Materialdüse 40 bei Verwendung der Düse 24.

Bei der in den Figs. 13 bis 17 gezeigten Düse 50 handelt es sich bevorzugt um eine Hochdruck- bzw. Compliant-Düse, bzw. eine Düse zur Verwendung in einer Hochdruck- bzw. Compliant-Düsenanordnung, insbesondere zur Verwendung in einem erfindungsgemäßen Verfahren zum Umrüsten einer Spritzpistole, insbesondere Farbspritzpistole, mit einem ersten Düseninnendruck zu einer Spritzpistole, insbesondere Farbspritzpistole, mit einem zweiten Düseninnendruck.

Fig. 18 ist eine perspektivische Ansicht auf einen Teil eines Ausführungsbeispiels eines Grundkörpers, nämlich auf den Bereich, in dem eine in Fig. 4 beispielhaft gezeigte Rund-Breitstrahlregulierungseinrichtung 9 angeordnet werden kann. Insbesondere ist in Fig. 18 das Innere der Rund-Breitstrahl-Luftverteilerkammer 68 zumindest teilweise erkennbar. Wie oben beschrieben, kann der Grundkörper 2, wie in Fig. 7 ersichtlich, am Kopfbereich 6 jeweils zwei Zerstäuberluft-Auslassöffnungen 20a, 20b und zwei Hornluft-Auslassöffnungen 22a, 22b aufweisen. Im Kopfbereich 6 sind die beiden Zerstäuberluft-Auslassöffnungen 20a, 20b voneinander beabstandet, ebenso die beiden Hornluft-Auslassöffnungen 22a, 22b. Die hinter den beiden Zerstäuberluft-Auslassöffnungen 20a, 20b liegenden Zerstäuberluftkanäle, d.h. die Luftkanäle die in Form der Zerstäuberluft-Auslassöffnungen 20a, 20b enden, erstrecken sich bis in die Rund-Breitstrahl-Luftverteilerkammer 68, laufen auf ihrem Weg in die Rund-Breitstrahl-Luftverteilerkammer 68 zusammen und treffen sich spätestens am Schnittpunkt mit einer Wandung der Rund-Breitstrahl-Luftverteilerkammer 68. Die Rund-Breitstrahl-Luftverteilerkammer 68 weist also nur eine einzige Zerstäuberluftkanalmündung 20c auf. Auch die hinter den beiden Hornluft-Auslassöffnungen 22a, 22b liegenden Hornluftkanäle, d.h. die Luftkanäle die in Form der Hornluft-Auslassöffnungen 22a, 22b enden, erstrecken sich bis in die Rund-Breitstrahl-Luftverteilerkammer 68, laufen auf ihrem Weg in die Rund-Breitstrahl-Luftverteilerkammer 68 zusammen und treffen sich spätestens am Schnittpunkt mit einer Wandung der Rund-Breitstrahl-Luftverteilerkammer 68. Die Rund-Breitstrahl-Luftverteilerkammer 68 weist also auch nur eine einzige Hornluftkanalmündung 22c auf.

Die Außenkonturen der Zerstäuberluftkanalmündung 20c und der Hornluftkanalmündung 22c in der Rund-Breitstrahl-Luftverteilerkammer 68 können die Außenkontur einer liegenden "8" aufweisen. Wenn sich die beiden Zerstäuberluftkanäle und die beiden Hornluftkanäle beim Eintritt in die Rund-Breitstrahl-Luftverteilerkammer 68 jeweils vollständig überlappen, hat die Zerstäuberluftkanalmündung 20c im Wesentlichen die gleiche Querschnittsform wie zumindest eine der Zerstäuberluft-Auslassöffnungen 20a und 20b und die Hornluftkanalmündung 22c hat im Wesentlichen die gleiche Querschnittsform wie eine der Hornluft-Auslassöffnungen 22a, 22b.

Im Stand der Technik sind verschiedene Rund-Breitstrahlregulierungseinrichtungen bekannt, beispielsweise aus der EP 0 706 832 B1 oder der EP 2 451 586 B1. Für den vorliegenden Grundkörper kann jede Art von Rund-Breitstrahlregulierungseinrichtungen zum Einsatz kommen. Vorzugsweise jedoch weist die Rund-Breitstrahl-Luftverteilerkammer 68 jedoch einen ersten Kammerabschnitt und einen zweiten Kammerabschnitt auf, wobei der zweite Kammerabschnitt einen größeren Durchmesser aufweist als der erste Kammerabschnitt. In den ersten Kammerabschnitt münden die Hornluftkanäle des Grundkörpers 2, d.h. die Hornluftkanalmündung 22c liegt in dem ersten Kammerabschnitt. In den zweiten Kammerabschnitt münden die Zerstäuberluftkanäle des Grundkörpers 2, d.h. die Zerstäuberluftkanalmündung 20c liegt in dem zweiten Kammerabschnitt. Die Abschnitte bilden eine Stufe auf die sich ein Teller einer Rund-Breitstrahlregulierungseinrichtung legen kann, um den ersten Kammerabschnitt zu verschließen und so die Luftzufuhr in die Hornluftkanalmündung 22c und somit in die Hornluftkanäle zu unterbinden. In diesem Fall werden beim Betrieb der Spritzpistole lediglich die Zerstäuberluftkanalmündung 20c und damit die Zerstäuberluftkanäle mit Luft versorgt. Die Spritzpistole erzeugt einen Rundstrahl mit im Wesentlichen kreisrundem Querschnitt, da keine Hornluft seitlich auf den Spritzstrahl einwirkt. Beispielsweise mittels eines Drehmechanismus kann der Teller der Rund-Breitstrahlregulierungseinrichtung vorzugsweise stufenlos von der Stufe zwischen erstem und zweitem Kammerabschnitt der Rund-Breitstrahl-Luftverteilerkammer 68 wegbewegbar sein, so dass der Teller die Luftzufuhr zum ersten Kammerabschnitt und somit zur Hornluftkanalmündung 22c und zu den Hornluftkanälen im Grundkörper 2 freigibt. Je weiter der Teller von der Stufe wegbewegt wird, desto mehr Luft kann durch die Hornluftkanäle und damit aus den Hornluftbohrungen strömen und desto mehr wird der Spritzstrahl seitlich zusammengedrückt, wodurch ein immer schmalerer Breitstrahl erzeugt wird.

Es sei abschließend darauf hingewiesen, dass die beschriebenen Ausführungsbeispiele nur eine beschränkte Auswahl an Ausführungsmöglichkeiten beschreiben und somit keine Einschränkung der vorliegenden Erfindung darstellen.

## Patentansprüche

1. Spritzpistole (1), insbesondere Farbspritzpistole, umfassend zumindest einen Grundkörper (2), eine Düse (24, 50) mit zumindest einer Materialdüse (40), eine Luftkappe (76, 78), einen ersten luftführenden Bereich und einen zweiten luftführenden Bereich, wobei der erste luftführende Bereich Luft führt, die zur Zerstäubung von zu verspritzendem Material verwendet wird, und der zweite luftführende Bereich Luft führt, die zur Beeinflussung eines Spritzstrahls verwendet wird, wobei der Grundkörper (2) zumindest einen Kopfbereich (6) zur Anbringung einer Düsenanordnung aufweist, wobei der Kopfbereich (6) zumindest eine innere Wandung (10), eine äußere Wandung (14) und eine dazwischen angeordnete mittlere Wandung (12) aufweist, wobei die Wandungen (10, 12, 14) umlaufend und einstückig mit dem Grundkörper (2) ausgebildet sind, wobei das vordere Ende der mittleren Wandung (12) entlang einer Achse (Z) gegenüber dem vorderen Ende der äußeren Wandung (14) zurückgesetzt ist und wobei der erste luftführende Bereich und der zweite luftführende Bereich zumindest bereichsweise durch die mittlere Wandung (12) des Grundkörpers (2), ein an der Materialdüse (40) einstückig angeordnetes Scheibenelement (32), zumindest eine an der Materialdüse (40) angeordnete, insbesondere unverlierbar angeordnete, Prallscheibe (30, 31, 42) und durch zumindest einen Teil der Luftkappe (76, 78) voneinander separiert sind, **dadurch gekennzeichnet, dass** die innere Wandung (10), die mittlere Wandung (12) und die äußere Wandung (14) jeweils kreisrund ausgestaltet und konzentrisch zueinander angeordnet sind.

2. Spritzpistole (1) nach Anspruch 1, **dadurch gekennzeichnet, dass** das vordere Ende der mittleren Wandung (12) entlang der Achse (Z) um 2 mm bis 4 mm gegenüber dem vorderen Ende der äußeren Wandung (14) zurückgesetzt ist.

3. Spritzpistole (1) nach Anspruch 2, **dadurch gekennzeichnet, dass** die innere Wandung (10) und die mittlere Wandung (12) eine erste Luftverteilerkammer (60) abgrenzen und die mittlere Wandung (12) und die äußere Wandung (14) eine zweite Luftverteilerkammer (62) abgrenzen.

4. Spritzpistole (1) nach Anspruch 2 oder 3, **dadurch gekennzeichnet, dass** zwischen der inneren Wandung (10) und der mittleren Wandung (12) eine erste Frontfläche (16) und zwischen der mittleren Wandung (12) und der äußeren Wandung (14) eine zweite Frontfläche (18) angeordnet ist, dass die erste Frontfläche (16) entlang der Achse (Z) zum vorderen Ende der äußeren Wandung (14) zumindest bereichsweise einen ersten Abstand (d1) aufweist, dass die zweite Frontfläche (18) entlang der Achse (Z) zum vorderen Ende der äußeren Wandung (14) zumindest bereichsweise einen zweiten Abstand (d2) aufweist, und dass der erste Abstand (d1) größer ist als der zweite Abstand (d2), insbesondere dass der erste Abstand (d1) 9 mm bis 11 mm und der zweite Abstand (d2) 4 mm bis 6 mm beträgt.

5. Spritzpistole (1) nach Anspruch 4, **dadurch gekennzeichnet, dass** zumindest die erste Frontfläche (16) und/oder die zweite Frontfläche (18) zumindest bereichsweise eine Nut (19) aufweisen, deren Breite vorzugsweise im Wesentlichen der Breite der ersten Frontfläche (16) bzw. der zweiten Frontfläche (18) entspricht und/oder welche vorzugsweise in Umfangsrichtung über 25 % bis 75 %, insbesondere über 45 % bis 55 %, des Umfangs der ersten Frontfläche (16) bzw. der zweiten Frontfläche (18) erstreckt.

6. Spritzpistole (1) nach Anspruch 5, **dadurch gekennzeichnet, dass** die zweite Frontfläche (18) zumindest bereichsweise eine Nut (19) mit einer Bodenfläche aufweist, wobei die Bodenfläche der Nut (19) entlang der Achse (Z) zum vorderen Ende der äußeren Wandung (14) einen dritten Abstand aufweist, und dass der dritte Abstand kleiner ist als der erste Abstand (d1) der ersten Frontfläche (16) zum vorderen Ende der äußeren Wandung (14).

7. Spritzpistole (1) nach einem der Ansprüche 4 bis 6, **dadurch gekennzeichnet, dass** die erste Frontfläche (16) zumindest eine innere Luftauslassöffnung (20a, 20b), insbesondere zwei innere Luftauslassöffnungen (20a, 20b), aufweist und dass die zweite Frontfläche (18) zumindest eine äußere Luftauslassöffnung (22a, 22b), insbesondere zwei äußere Luftauslassöffnungen (22a, 22b), aufweist, wobei vorzugsweise sich die zumindest eine innere Luftauslassöffnung (20a, 20b) der ersten Frontfläche (16) zumindest bereichsweise über zumindest 85 % der Breite der ersten Frontfläche (16) erstreckt und sich die zumindest eine äußere Luftauslassöffnung (22a, 22b) der zweiten Frontfläche (18) zumindest bereichsweise über zumindest 85 % der Breite der zweiten Frontfläche (18) erstreckt.

8. Spritzpistole (1) nach einem der Ansprüche 4 bis 7, **dadurch gekennzeichnet, dass** der Grundkörper (2) zumindest zwei Zerstäuberluftkanäle (64) aufweist, welche sich von der ersten Frontfläche (16) in eine Rund-Breitstrahl-Luftverteilerkammer (68) erstrecken und/oder dass der Grundkörper (2) zumindest zwei Hornluftkanäle (66) aufweist, welche sich von der zweiten Frontfläche (18) in eine Rund-Breitstrahl-Luftverteilerkammer (68) erstrecken, wobei die Zerstäuberluftkanäle (64) im Bereich der ersten Frontfläche (16) voneinander beabstandet sind und sich im Bereich der Rund-Breitstrahl-Luftverteilerkammer (68) zumindest teilweise überschneiden, und/oder wobei die Hornluftkanäle (66) im Bereich der zweiten Frontfläche (18) voneinander beabstandet sind und sich im Bereich der Rund-Breitstrahl-Luftverteilerkammer (68) zumindest teilweise überschneiden.

9. Spritzpistole (1) nach einem der Ansprüche 2 bis 8, **dadurch gekennzeichnet, dass** das vordere Ende der inneren Wandung (10) entlang der Achse (Z) gegenüber dem vorderen Ende der mittleren Wandung (12) zurückgesetzt ist, insbesondere dass das vordere Ende der inneren Wandung (10) entlang der Achse (Z) um 0,4 mm bis 0,6 mm gegenüber dem vorderen Ende der mittleren Wandung (12) zurückgesetzt ist.

10. Spritzpistole (1) nach einem der Ansprüche 2 bis 9, **dadurch gekennzeichnet, dass** die innere Wandung (10) einen Außendurchmesser von 13 mm bis 15 mm und/oder einen Innendurchmesser von 11 mm bis 13 mm, die mittlere Wandung (12) einen Außendurchmesser von 22 mm bis 24 mm und/oder einen Innendurchmesser von 20 mm bis 22 mm, und die äußere Wandung (14) einen Außendurchmesser von 33 mm bis 35 mm und/oder einen Innendurchmesser von 31 mm bis 33 mm aufweist.

11. Verfahren zum Umrüsten einer Spritzpistole (1), insbesondere Farbspritzpistole, mit einem ersten Düseninnendruck zu einer Spritzpistole (1), insbesondere Farbspritzpistole, mit einem zweiten Düseninnendruck, wobei der erste Düseninnendruck größer ist als der zweite Düseninnendruck, und wobei das Verfahren zumindest die folgenden Schritte umfasst:
a. Entfernen einer Hochdruck-Düsenanordnung von oder aus einem Grundkörper (2) der Spritzpistole (1), wobei die Hochdruck-Düsenanordnung zumindest eine Düse (50) mit einer Materialdüse (40) mit einem hohlen Abschnitt zur Durchleitung des zu verspritzenden Materials und einer Materialauslassöffnung (28) aufweist;
b. Anordnen einer Niederdruck-Düsenanordnung in oder an dem Grundkörper (2) der Spritzpistole (1), wobei die Niederdruck-Düsenanordnung zumindest eine Düse (24) mit einer Materialdüse (40) mit einem hohlen Abschnitt zur Durchleitung des zu verspritzenden Materials und einer Materialauslassöffnung (28) aufweist,
**dadurch gekennzeichnet, dass** die Düse (50) der Hochdruck-Düsenanordnung, welche von oder aus dem Grundkörper (2) der Spritzpistole (1) entfernt wird, ferner ein am äußeren Umfang des hohlen Abschnitts angeordnetes Scheibenelement (32) und zumindest eine erste Prallscheibe (31) aufweist, wobei die erste Prallscheibe (31) an der der Materialauslassöffnung (28) abgewandten Seite des Scheibenelements (32) angeordnet ist und einen inneren und einen äußeren Umfang aufweist, und dass die Düse (24) der Niederdruck-Düsenanordnung, welche in oder an dem Grundkörper (2) der Spritzpistole angeordnet wird, ferner ein am äußeren Umfang des hohlen Abschnitts angeordnetes Scheibenelement (32) und zumindest eine erste Prallscheibe (30) aufweist, wobei die erste Prallscheibe (30) an der der Materialauslassöffnung (28) abgewandten Seite des Scheibenelements (32) angeordnet ist, einen inneren und einen äußeren Umfang aufweist, und eine sich an der der Materialauslassöffnung (28) abgewandten Seite der ersten Prallscheibe (30) angeordnete zweite Prallscheibe (42) aufweist, wobei der äußere Umfang der ersten Prallscheibe (30) der Düse (24) der Niederdruck-Düsenanordnung kleiner ist als der äußere Umfang der ersten Prallscheibe (31) der Düse (50) der Hochdruck-Düsenanordnung.

12. Verfahren nach Anspruch 11, **dadurch gekennzeichnet, dass** das Verfahren zumindest die folgenden weiteren Schritte umfasst:
a. Entfernen einer über einen Luftdüsenring (74) am Grundkörper (2) angeordneten Hochdruck-Luftkappe (76), wobei die Hochdruck-Luftkappe (76) zumindest eine zentrale Öffnung (77) mit einem ersten Durchmesser aufweist;
b. Anordnen einer über einen Luftdüsenring (74) am Grundkörper (2) anordenbaren Niederdruck-Luftkappe (78), wobei die Niederdruck-Luftkappe (78) zumindest eine zentrale Öffnung (79) mit einem zweiten Durchmesser aufweist und wobei der zweite Durchmesser größer ist als der erste Durchmesser der Hochdruck-Luftkappe (76).

13. Verfahren zum Umrüsten einer Spritzpistole (1), insbesondere Farbspritzpistole, mit einem ersten Düseninnendruck zu einer Spritzpistole (1), insbesondere Farbspritzpistole, mit einem zweiten Düseninnendruck, wobei der erste Düseninnendruck kleiner ist als der zweite Düseninnendruck, wobei das Verfahren zumindest die folgenden Schritte umfasst:
a. Entfernen einer Niederdruck-Düsenanordnung von oder aus einem Grundkörper (2) der Spritzpistole (1), wobei die Niederdruck-Düsenanordnung zumindest eine Düse (24) mit einer Materialdüse (40) mit einem hohlen Abschnitt zur Durchleitung des zu verspritzenden Materials und einer Materialauslassöffnung (28) aufweist;
b. Anordnen einer Hochdruck-Düsenanordnung in oder an dem Grundkörper (2) der Spritzpistole (1), wobei die Hochdruck-Düsenanordnung zumindest eine Düse (50) mit einer Materialdüse (40) mit einem hohlen Abschnitt zur Durchleitung des zu verspritzenden Materials und einer Materialauslassöffnung (28) aufweist,
**dadurch gekennzeichnet, dass** die Düse (24) der Niederdruck-Düsenanordnung, welche von oder aus dem Grundkörper (2) der Spritzpistole (1) entfernt wird, ferner ein am äußeren Umfang des hohlen Abschnitts angeordnetes Scheibenelement (32) und zumindest eine erste Prallscheibe (30) aufweist, wobei die erste Prallscheibe an der der Materialauslassöffnung (28) abgewandten Seite des Scheibenelements (32) angeordnet ist, einen inneren und einen äußeren Umfang aufweist, und eine sich an der der Materialauslassöffnung (28) abgewandten Seite der ersten Prallscheibe (30) angeordnete zweite Prallscheibe (42) aufweist, und dass die Düse (50) der Hochdruck-Düsenanordnung, welche in oder an dem Grundkörper (2) der Spritzpistole angeordnet wird, ferner ein am äußeren Umfang des hohlen Abschnitts angeordnetes Scheibenelement (32) und zumindest eine erste Prallscheibe (31) aufweist, wobei die erste Prallscheibe (31) an der der Materialauslassöffnung (28) abgewandten Seite des Scheibenelements (32) angeordnet ist und einen inneren und einen äußeren Umfang aufweist, wobei der äußere Umfang der ersten Prallscheibe (31) der Düse (50) der Hochdruck-Düsenanordnung größer ist als der äußere Umfang der ersten Prallscheibe (30) der Düse (24) der Niederdruck-Düsenanordnung.

14. Verfahren nach Anspruch 13, **dadurch gekennzeichnet, dass** das Verfahren zumindest die folgenden weiteren Schritte umfasst:
a. Entfernen einer über einen Luftdüsenring (74) am Grundkörper (2) angeordneten Niederdruck-Luftkappe (78), wobei die Niederdruck-Luftkappe (78) zumindest eine zentrale Öffnung (79) mit einem ersten Durchmesser aufweist;
b. Anordnen einer über einen Luftdüsenring (74) am Grundkörper (2) anordenbaren Hochdruck-Luftkappe (76), wobei die Hochdruck-Luftkappe (76) zumindest eine zentrale Öffnung (77) mit einem zweiten Durchmesser aufweist und wobei der zweite Durchmesser kleiner ist als der erste Durchmesser der Niederdruck-Luftkappe (78).

## Claims

1. Spray gun (1), in particular a paint spray gun, comprising at least one main body (2), a nozzle (24, 50) having at least one material nozzle (40), an air cap (76, 78), a first air-conducting region and a second air-conducting region, wherein the first air-conducting region conducts air that is used to atomize material to be sprayed, and the second air-conducting region conducts air that is used to influence a spray jet, wherein the main body (2) has at least one head region (6) for attaching a nozzle arrangement, wherein the head region (6) has at least one inner wall (10), one outer wall (14) and one middle wall (12) arranged therebetween, wherein the walls (10, 12, 14) are formed circumferentially and as a single piece with the main body (2), wherein the front end of the middle wall (12) is set back along an axis (Z) relative to the front end of the outer wall (14), and wherein the first air-conducting region and the second air-conducting region are separated from one another, at least in regions, by the middle wall (12) of the main body (2), a disk element (32) arranged as a single piece on the material nozzle (40), at least one baffle disk (30, 31, 42) arranged, in particular nondetachably arranged, on the material nozzle (40), and by at least a part of the air cap (76, 78), **characterized in that** the inner wall (10), the middle wall (12) and the outer wall (14) are each circular and arranged concentrically with one another.

2. Spray gun (1) according to claim 1, **characterized in that** the front end of the middle wall (12) is set back along the axis (Z) by 2 mm to 4 mm relative to the front end of the outer wall (14).

3. Spray gun (1) according to claim 2, **characterized in that** the inner wall (10) and the middle wall (12) delimit a first air distribution chamber (60) and the middle wall (12) and the outer wall (14) delimit a second air distribution chamber (62).

4. Spray gun (1) according to claim 2 or 3, **characterized in that** a first front surface (16) is arranged between the inner wall (10) and the middle wall (12) and a second front surface (18) is arranged between the middle wall (12) and the outer wall (14), **in that** the first front surface (16) is, at least in regions, at a first distance (d1) along the axis (Z) from the front end of the outer wall (14), **in that** the second front surface (18) is, at least in regions, at a second distance (d2) along the axis (Z) from the front end of the outer wall (14), **and in that** the first distance (d1) is greater than the second distance (d2), **in particular in that** the first distance (d1) is 9 mm to 11 mm and the second distance (d2) is 4 mm to 6 mm.

5. Spray gun (1) according to claim 4, **characterized in that** at least the first front surface (16) and/or the second front surface (18) have, at least in regions, a groove (19), the width of which preferably corresponds substantially to the width of the first front surface (16) or the second front surface (18) and/or which preferably extends in the circumferential direction over 25% to 75%, in particular over 45% to 55%, of the circumference of the first front surface (16) or the second front surface (18).

6. Spray gun (1) according to claim 5, **characterized in that** the second front surface (18) has, in at least regions, a groove (19) having a bottom surface, wherein the bottom surface of the groove (19) is at a third distance along the axis (Z) from the front end of the outer wall (14), **and in that** the third distance is smaller than the first distance (d1) of the first front surface (16) from the front end of the outer wall (14).

7. Spray gun (1) according to any of claims 4 to 6, **characterized in that** the first front surface (16) has at least one inner air-outlet opening (20a, 20b), in particular two inner air-outlet openings (20a, 20b) **and in that** the second front surface (18) has at least one outer air-outlet opening (22a, 22b), in particular two outer air-outlet openings (22a, 22b), wherein preferably the at least one inner air-outlet opening (20a, 20b) of the first front surface (16) extends, at least in regions, over at least 85% of the width of the first front surface (16) and the at least one outer air-outlet opening (22a, 22b) of the second front surface (18) extends, at least in regions, over at least 85% of the width of the second front surface (18).

8. Spray gun (1) according to any of claims 4 to 7, **characterized in that** the main body (2) has at least two atomization air channels (64) which extend from the first front surface (16) into a fan control air distribution chamber (68) **and/or in that** the main body (2) has at least two horn air channels (66) which extend from the second front surface (18) into a fan control air distribution chamber (68), wherein the atomization air channels (64) are spaced apart from one another in the region of the first front surface (16) and at least partially overlap in the region of the fan control air distribution chamber (68), and/or wherein the horn air channels (66) are spaced apart from one another in the region of the second front surface (18) and at least partially overlap in the region of the fan control air distribution chamber (68).

9. Spray gun (1) according to any of claims 2 to 8, **characterized in that** the front end of the inner wall (10) is set back along the axis (Z) relative to the front end of the middle wall (12), **in particular in that** the front end of the inner wall (10) is set back along the axis (Z) by 0.4 mm to 0.6 mm relative to the front end of the middle wall (12).

10. Spray gun (1) according to any of claims 2 to 9, **characterized in that** the inner wall (10) has an outer diameter of 13 mm to 15 mm and/or an inner diameter of 11 mm to 13 mm, the middle wall (12) has an outer diameter of 22 mm to 24 mm and/or an inner diameter of 20 mm to 22 mm, and the outer wall (14) has an outer diameter of 33 mm to 35 mm and/or an inner diameter of 31 mm to 33 mm.

11. Method for modifying a spray gun (1), in particular a paint spray gun, having a first internal nozzle pressure to form a spray gun (1), in particular a paint spray gun, having a second internal nozzle pressure, wherein the first internal nozzle pressure is greater than the second internal nozzle pressure, and wherein the method comprises at least the following steps:
a. removing a high-pressure nozzle arrangement from or out of a main body (2) of the spray gun (1), wherein the high-pressure nozzle arrangement has at least one nozzle (50) having a material nozzle (40), which material nozzle (40) has a hollow portion for the passage of the material to be sprayed, and a material outlet opening (28);
b. arranging a low-pressure nozzle arrangement in or on the main body (2) of the spray gun (1), wherein the low-pressure nozzle arrangement has at least one nozzle (24) having a material nozzle (40), which material nozzle (40) has a hollow portion for the passage of the material to be sprayed, and a material outlet opening (28),
**characterized in that** the nozzle (50) of the high-pressure nozzle arrangement, which is removed from or out of the main body (2) of the spray gun (1), further comprises a disk element (32), arranged on the outer circumference of the hollow portion, and at least one first baffle disk (31), wherein the first baffle disk (31) is arranged on the side of the disk element (32) facing away from the material outlet opening (28) and has an inner and an outer circumference,
**and in that** the nozzle (24) of the low-pressure nozzle arrangement, which is arranged in or on the main body (2) of the spray gun, further comprises a disk element (32) arranged on the outer circumference of the hollow portion and at least one first baffle disk (30), wherein the first baffle disk (30) is arranged on the side of the disk element (32) facing away from the material outlet opening (28), has an inner and an outer circumference, and has a second baffle disk (42) arranged on the side of the first baffle disk (30) facing away from the material outlet opening (28), wherein the outer circumference of the first baffle disk (30) of the nozzle (24) of the low-pressure nozzle arrangement is smaller than the outer circumference of the first baffle disk (31) of the nozzle (50) of the high-pressure nozzle arrangement.

12. Method according to claim 11, **characterized in that** the method comprises at least the following further steps:
a. removing a high-pressure air cap (76) arranged on the main body (2) via an air cap ring (74), wherein the high-pressure air cap (76) has at least one central opening (77) which has a first diameter;
b. arranging a low-pressure air cap (78) which can be arranged on the main body (2) via an air cap ring (74), wherein the low-pressure air cap (78) has at least one central opening (79) having a second diameter and wherein the second diameter is larger than the first diameter of the high-pressure air cap (76).

13. Method for modifying a spray gun (1), in particular a paint spray gun, having a first internal nozzle pressure to form a spray gun (1), in particular a paint spray gun, having a second internal nozzle pressure, wherein the first internal nozzle pressure is lower than the second internal nozzle pressure, wherein the method comprises at least the following steps:
a. removing a low-pressure nozzle arrangement from or out of a main body (2) of the spray gun (1), wherein the low-pressure nozzle arrangement has at least one nozzle (24) having a material nozzle (40), which material nozzle (40) has a hollow portion for the passage of the material to be sprayed, and a material outlet opening (28);
b. arranging a high-pressure nozzle arrangement in or on the main body (2) of the spray gun (1), wherein the high-pressure nozzle arrangement has at least one nozzle (50) having a material nozzle (40), which material nozzle (40) has a hollow portion for the passage of the material to be sprayed, and a material outlet opening (28),
**characterized in that** the nozzle (24) of the low-pressure nozzle arrangement, which is removed from or out of the main body (2) of the spray gun (1), further comprises a disk element (32), arranged on the outer circumference of the hollow portion, and at least one first baffle disk (30), wherein the first baffle disk is arranged on the side of the disk element (32) facing away from the material outlet opening (28), has an inner and an outer circumference, and has a second baffle disk (42) arranged on the side of the first baffle disk (30) facing away from the material outlet opening (28), **and in that** the nozzle (50) of the high-pressure nozzle arrangement, which is arranged in or on the main body (2) of the spray gun, further comprises a disk element (32), arranged on the outer circumference of the hollow portion, and at least one first baffle disk (31), wherein the first baffle disk (31) is arranged on the side of the disk element (32) facing away from the material outlet opening (28) and has an inner and an outer circumference, wherein the outer circumference of the first baffle disk (31) of the nozzle (50) of the high-pressure nozzle arrangement is larger than the outer circumference of the first baffle disk (30) of the nozzle (24) of the low-pressure nozzle arrangement.

14. Method according to claim 13, **characterized in that** the method comprises at least the following further steps:
a. removing a low-pressure air cap (78) arranged on the main body (2) via an air cap ring (74), wherein the low-pressure air cap (78) has at least one central opening (79) having a first diameter;
b. arranging a high-pressure air cap (76) which can be arranged on the main body (2) via an air cap ring (74), wherein the high-pressure air cap (76) has at least one central opening (77) having a second diameter, and wherein the second diameter is smaller than the first diameter of the low-pressure air cap (78).

## Revendications

1. Pistolet pulvérisateur (1), en particulier pistolet pulvérisateur de peinture, comprenant au moins un corps de base (2), une buse (24, 50) compotant au moins une buse pour matériau (40), un chapeau d'air (76, 78), une première zone de guidage d'air et une seconde zone de guidage d'air, dans lequel la première zone de guidage d'air guide de l'air qui est utilisé pour vaporiser du matériau à pulvériser, et la seconde zone de guidage d'air guide de l'air qui est utilisé pour influencer un jet de pulvérisation, dans lequel le corps de base (2) présente au moins une zone de tête (6) pour le montage d'un agencement de buses, dans lequel la zone de tête (6) présente au moins une paroi intérieure (10), une paroi extérieure (14) et une paroi centrale (12) disposée entre celles-ci, dans lequel les parois (10, 12, 14) sont réalisées sur la périphérie et d'un seul tenant avec le corps de base (2), dans lequel l'extrémité avant de la paroi centrale (12) est en retrait le long d'un axe (Z) par rapport à l'extrémité avant de la paroi extérieure (14) et dans lequel la première zone de guidage d'air et la seconde zone de guidage d'air sont séparées l'une de l'autre, au moins dans certaines zones, par la paroi centrale (12) du corps de base (2), un élément formant disque (32) disposé d'une seule pièce sur la buse pour matériau (40), au moins un disque de déviation (30, 31, 42) disposé sur la buse pour matériau (40), en particulier disposé de manière à être imperdable, et par au moins une partie du chapeau d'air (76, 78), **caractérisé en ce que** la paroi intérieure (10), la paroi centrale (12) et la paroi extérieure (14) sont respectivement de forme circulaire et disposées de manière concentrique les unes par rapport aux autres.

2. Pistolet pulvérisateur (1) selon la revendication 1, **caractérisé en ce que** l'extrémité avant de la paroi centrale (12) est en retrait de 2 mm à 4 mm le long de l'axe (Z) par rapport à l'extrémité avant de la paroi extérieure (14).

3. Pistolet pulvérisateur (1) selon la revendication 2, **caractérisé en ce que** la paroi intérieure (10) et la paroi centrale (12) délimitent une première chambre de distribution d'air (60) et la paroi centrale (12) et la paroi extérieure (14) délimitent une seconde chambre de distribution d'air (62).

4. Pistolet pulvérisateur (1) selon la revendication 2 ou 3,
**caractérisé en ce qu'**une première surface frontale (16) est disposée entre la paroi intérieure (10) et la paroi centrale (12) et une seconde surface frontale (18) est disposée entre la paroi centrale (12) et la paroi extérieure (14), **en ce que** la première surface frontale (16) présente, au moins dans certaines zones, une première distance (d1) le long de l'axe (Z) par rapport à l'extrémité avant de la paroi extérieure (14), **en ce que** la seconde surface frontale (18) présente, au moins dans certaines zones, une deuxième distance (d2) le long de l'axe (Z) par rapport à l'extrémité avant de la paroi extérieure (14), **et en ce que** la première distance (d1) est supérieure à la deuxième distance (d2), en particulier **en ce que** la première distance (d1) va de 9 mm à 11 mm et la deuxième distance (d2) va de 4 mm à 6 mm.

5. Pistolet pulvérisateur (1) selon la revendication 4,
**caractérisé en ce qu'**au moins la première surface frontale (16) et/ou la seconde surface frontale (18) présentent, au moins dans certaines zones, une rainure (19) dont la largeur correspond de préférence sensiblement à la largeur de la première surface frontale (16) ou de la seconde surface frontale (18) et/ou qui s'étend de préférence dans la direction périphérique sur 25 % à 75 %, en particulier sur 45 % à 55 %, de la périphérie de la première surface frontale (16) ou de la seconde surface frontale (18).

6. Pistolet pulvérisateur (1) selon la revendication 5, **caractérisé en ce que** la seconde surface frontale (18) présente, au moins dans certaines zones, une rainure (19) comportant une surface de fond, dans lequel la surface de fond de la rainure (19) présente une troisième distance le long de l'axe (Z) par rapport à l'extrémité avant de la paroi extérieure (14), **et en ce que** la troisième distance est inférieure à la première distance (d1) de la première surface frontale (16) par rapport à l'extrémité avant de la paroi extérieure (14).

7. Pistolet pulvérisateur (1) selon l'une des revendications 4 à 6, **caractérisé en ce que** la première surface frontale (16) présente au moins une ouverture de sortie d'air intérieure (20a, 20b), en particulier deux ouvertures de sortie d'air intérieures (20a, 20b), **et en ce que** la seconde surface frontale (18) présente au moins une ouverture de sortie d'air extérieure (22a, 22b), en particulier deux ouvertures de sortie d'air extérieures (22a, 22b), dans lequel, de préférence, l'au moins une ouverture de sortie d'air intérieure (20a, 20b) de la première surface frontale (16) s'étend, au moins dans certaines zones, sur au moins 85 % de la largeur de la première surface frontale (16) et l'au moins une ouverture de sortie d'air extérieure (22a, 22b) de la seconde surface frontale (18) s'étend, au moins dans certaines zones, sur au moins 85 % de la largeur de la seconde surface frontale (18).

8. Pistolet pulvérisateur (1) selon l'une des revendications 4 à 7, **caractérisé en ce que** le corps de base (2) présente au moins deux canaux d'air de vaporisation (64) qui s'étendent depuis la première surface frontale (16) dans une chambre de distribution d'air à jet rond/plat (68) **et/ou en ce que** le corps de base (2) présente au moins deux canaux d'air de corne (66) qui s'étendent depuis la seconde surface frontale (18) dans une chambre de distribution d'air à jet rond/plat(68), dans lequel les canaux d'air de vaporisation (64) sont espacés les uns des autres dans la zone de la première surface frontale (16) et se recoupent au moins partiellement dans la zone de la chambre de distribution d'air à jet rond/plat (68), et/ou dans lequel les canaux d'air de corne (66) sont espacés les uns des autres dans la zone de la seconde surface frontale (18) et se recoupent au moins partiellement dans la zone de la chambre de distribution d'air à jet rond/plat (68).

9. Pistolet pulvérisateur (1) selon l'une des revendications 2 à 8, **caractérisé en ce que** l'extrémité avant de la paroi intérieure (10) est en retrait le long de l'axe (Z) par rapport à l'extrémité avant de la paroi centrale (12), en particulier, **en ce que** l'extrémité avant de la paroi intérieure (10) est en retrait le long de l'axe (Z) de 0,4 mm à 0,6 mm par rapport à l'extrémité avant de la paroi centrale (12).

10. Pistolet pulvérisateur (1) selon l'une des revendications 2 à 9, **caractérisé en ce que** la paroi intérieure (10) présente un diamètre extérieur allant de 13 mm à 15 mm et/ou un diamètre intérieur allant de 11 mm à 13 mm, la paroi médiane (12) présente un diamètre extérieur allant de 22 mm à 24 mm et/ou un diamètre intérieur allant de 20 mm à 22 mm, et la paroi extérieure (14) présente un diamètre extérieur allant de 33 mm à 35 mm et/ou un diamètre intérieur allant de 31 mm à 33 mm.

11. Procédé permettant de transformer un pistolet pulvérisateur (1), en particulier un pistolet pulvérisateur de peinture, comportant une première pression intérieure de buses en un pistolet pulvérisateur (1), en particulier un pistolet pulvérisateur de peinture, comportant une seconde pression intérieure de buses, dans lequel la première pression intérieure de buses est supérieure à la seconde pression intérieure de buses, et dans lequel le procédé comprend au moins les étapes suivantes :
a. enlèvement d'un agencement de buses haute pression d'un corps de base (2) du pistolet pulvérisateur (1), dans lequel l'agencement de buses haute pression présente au moins une buse (50) comportant une buse pour matériau (40) comportant une section creuse pour le passage du matériau à pulvériser et une ouverture de sortie de matériau (28) ;
b. disposition d'un agencement de buses basse pression dans ou sur le corps de base (2) du pistolet pulvérisateur (1), dans lequel l'agencement de buses basse pression présente au moins une buse (24) comportant une buse pour matériau (40) comportant une section creuse pour le passage du matériau à pulvériser et une ouverture de sortie de matériau (28),
**caractérisé en ce que** la buse (50) de l'agencement de buses haute pression qui est enlevée du corps de base (2) du pistolet pulvérisateur (1) présente en outre un élément formant disque (32) disposé sur la périphérie extérieure de la section creuse et au moins un premier disque de déviation (31), dans lequel le premier disque de déviation (31) est disposé sur le côté de l'élément formant disque (32) opposé à l'ouverture de sortie de matériau (28) et présente une périphérie intérieure et une périphérie extérieure, **et en ce que** la buse (24) de l'agencement de buses basse pression qui est disposée dans ou sur le corps de base (2) du pistolet pulvérisateur présente en outre un élément formant disque (32) disposé sur la périphérie extérieure de la section creuse et au moins un premier disque de déviation (30), dans lequel le premier disque de déviation (30) est disposé sur le côté de l'élément formant disque (32) opposé à l'ouverture de sortie de matériau (28), présente une périphérie intérieure et une périphérie extérieure, et présente un second disque de déviation (42) disposé sur le côté du premier disque de déviation (30) opposé à l'ouverture de sortie de matériau (28), dans lequel la périphérie extérieure du premier disque de déviation (30) de la buse (24) de l'agencement de buses basse pression est plus petite que la périphérie extérieure du premier disque de déviation (31) de la buse (50) de l'agencement de buses haute pression.

12. Procédé selon la revendication 11, **caractérisé en ce que** le procédé comprend au moins les étapes supplémentaires suivantes :
a. enlèvement d'un chapeau d'air haute pression (76) disposé sur le corps de base (2) par l'intermédiaire d'une bague de buse à air (74), dans lequel le chapeau d'air haute pression (76) présente au moins une ouverture centrale (77) d'un premier diamètre ;
b. disposition d'un chapeau d'air basse pression (78) pouvant être disposé sur le corps de base (2) par l'intermédiaire d'une bague de buse à air (74), dans lequel le chapeau d'air basse pression (78) présente au moins une ouverture centrale (79) d'un second diamètre et dans lequel le second diamètre est supérieur au premier diamètre du chapeau d'air haute pression (76).

13. Procédé permettant de transformer un pistolet pulvérisateur (1), en particulier un pistolet pulvérisateur de peinture, comportant une première pression intérieure de buses en un pistolet pulvérisateur (1), en particulier un pistolet pulvérisateur de peinture, comportant une seconde pression intérieure de buses, dans lequel la première pression intérieure de buses est inférieure à la seconde pression intérieure de buses, dans lequel le procédé comprend au moins les étapes suivantes :
a. enlèvement d'un agencement de buses basse pression d'un corps de base (2) du pistolet pulvérisateur (1), dans lequel l'agencement de buses basse pression présente au moins une buse (24) comportant une buse pour matériau (40) comportant une section creuse pour le passage du matériau à pulvériser et une ouverture de sortie de matériau (28) ;
b. disposition d'un agencement de buses haute pression dans ou sur le corps de base (2) du pistolet pulvérisateur (1), dans lequel l'agencement de buses haute pression présente au moins une buse (50) comportant une buse pour matériau (40) comportant une section creuse pour le passage du matériau à pulvériser et une ouverture de sortie de matériau (28),
**caractérisé en ce que** la buse (24) de l'agencement de buses basse pression qui est enlevée du corps de base (2) du pistolet pulvérisateur (1) présente en outre un élément formant disque (32) disposé sur la périphérie extérieure de la section creuse et au moins un premier disque de déviation (30), dans lequel le premier disque de déviation est disposé sur le côté de l'élément formant disque (32) opposé à l'ouverture de sortie de matériau (28), présente une périphérie intérieure et une périphérie extérieure, et présente un second disque de déviation (42) disposé sur le côté du premier disque de déviation (30) opposé à l'ouverture de sortie de matériau (28), **et en ce que** la buse (50) de l'agencement de buses haute pression qui est disposée dans ou sur le corps de base (2) du pistolet pulvérisateur présente en outre un élément formant disque (32) disposé sur la périphérie extérieure de la section creuse et au moins un premier disque de déviation (31), dans lequel le premier disque de déviation (31) est disposé sur le côté de l'élément formant disque (32) opposé à l'ouverture de sortie de matériau (28) et présente une périphérie intérieure et une périphérie extérieure, dans lequel la périphérie extérieure du premier disque de déviation (31) de la buse (50) de l'agencement de buses haute pression est plus grande que la périphérie extérieure du premier disque de déviation (30) de la buse (24) de l'agencement de buses basse pression.

14. Procédé selon la revendication 13, **caractérisé en ce que** le procédé comprend au moins les étapes supplémentaires suivantes :
a. enlèvement d'un chapeau d'air basse pression (78) disposé sur le corps de base (2) par l'intermédiaire d'une bague de buse à air (74), dans lequel le chapeau d'air basse pression (78) présente au moins une ouverture centrale (79) d'un premier diamètre ;
b. disposition d'un chapeau d'air haute pression (76) pouvant être disposé sur le corps de base (2) par l'intermédiaire d'une bague de buse à air (74), dans lequel le chapeau d'air haute pression (76) présente au moins une ouverture centrale (77) d'un second diamètre et dans lequel le second diamètre est plus petit que le premier diamètre du chapeau d'air basse pression (78).
